# EUROPEAN PATENT APPLICATION

(11) **EP 1 548 480 A1**
(43) Date of publication of application: **29.06.2005**
(21) Application number: 03808878.7
(22) Date of filing: 05.09.2003
(51) Int. Cl.: G02B 21/00, G02B 21/36, H04N 7/18

(54) **MICROSCOPE IMAGE PROCESSING SYSTEM, MICROSCOPE IMAGE PROCESSING METHOD, PROGRAM, AND RECORDING MEDIUM**

(30) Priority: 06.09.2002 JP 2002262013; 14.11.2002 JP 2002330233
(71) Applicant: Celestar Lexico-Sciences, Inc., Chiba-shi, Chiba 261-8501 (JP)
(72) Inventor: UEMURA, Yasuo c/o Celestar Lexico-Sciences, Inc., Chiba-shi, Chiba 261-8501 (JP); KAWAMURA, Akira c/o Celestar Lexico-Sciences, Inc., Chiba-shi, Chiba 261-8501 (JP)
(74) Representative: HOFFMANN - EITLE
(86) International application number: PCT/JP2003/011367
(87) International publication number: WO 2004/036283

(57) **Abstract**

An image analysis device (100) integratively takes photographs within each well at a predetermined magnification. An image controlling device (200) communicates with the image analysis device (100) via a network (300) for acquiring the taken images and displays the same as thumbnails. On the display of the image controlling device (200), the operator designates locations of the sample to be photographed for each well. The image controlling device (200) informs the image analysis device (100) of the instructions for photographing in accordance with the designated conditions. The image analysis device (100) individually takes photographs in accordance with the locations and conditions designated by the image controlling device (200).

## Description

### TECHNICAL FIELD

The present invention relates to a microscope image processing system, microscope image processing method, program, and recording medium. More specifically, the present invention relates to a microscope image processing system, microscope image processing method, program, and recording medium that enable to automatically take microscope images as a user thereof intends.

### BACKGROUND ART

In order to take photographs of samples arranged in line on a multiwell plate or the like by use of a microscope, it is necessary to carry out the following six steps repeatedly, most of which require manual operations.
(1) Stage movement for photographing in different wells
(2) Stage movement for photographing in different areas in a well (framing a sample)
(3) Setting magnification of objective lens
(4) Focus adjustment
(5) Setting conditions for taking photographs (exposure time, white balance, light amount adjustment, and so forth)
(6) Saving an image (naming a file)

Some of image analysis systems using a commercially available microscope can automatically carry out some of the aforementioned steps.

However, there has been no image analysis system that completely carries out all of the aforementioned microscopic imaging steps automatically as a user intends.

Especially, among the aforementioned procedures, the step (2), i.e. stage movement for photographing in different areas in the well, has not been automatically carried out by any system yet. Therefore, that step has had to be carried out either by complete manual operation, or by taking photographs automatically over a large area in the well and picking up the image taken in an appropriate area among them. As a result, in the case of performing the manual operation, the operator has to be involved in the operation during all over the photographing step. Alternatively, in the case of automatically taking photographs over the extensive areas within the well, many useless photographs are taken, which is time and cost-consuming.

Further, with the conventional image analysis system with a microscope, it is unable to take photographs while confirming photographed images, photographing conditions, and photographed locations in the sample per plate, which has been another problem with the conventional art.

As explained above, the conventional systems and the like have had many problems. As a result, such a conventional image analysis system with the microscope is inconvenient and inefficient for both the user and a manager thereof.

The aforementioned prior art and the problems to be solved by the invention are not limited to the case of taking photographs of the samples arranged in line on a multiwell plate or the like by use of a microscope, but can be extended to the cases of any systems that take photographs of a plurality of samples by use of a microscope.

The present invention has been made in consideration of the aforementioned problems with the conventional art. Accordingly, the object of the present invention is to provide a microscope image processing system, microscope image processing method, program, and recording medium that enable to automatically take microscope images as a user thereof intends.

### DISCLOSURE OF THE INVENTION

To accomplish the aforementioned object, the microscope image processing system according to the present invention has an integrative photographing unit that integratively photographs each sample holding portion of a sample holder at a predetermined magnification with a microscope; a thumbnail displaying unit that displays image files photographed by the integrative photographing unit as thumbnails; an individual photographing information designating unit that designates individual photographing information concerning the locations and magnifications of samples that a user wishes to photograph, the information corresponding to the image files that the user selects from the image files displayed on the thumbnail displaying unit; and an individual photographing unit that photographs each part within the sample holding portion in accordance with the locations and magnifications designated by the individual photographing information.

According to this system, each sample holder portion (for example, each well of a multiwell plate or the like) of the sample holder (for example, a multiwell plate or the like) are integratively photographed by use of the microscope at a predetermined magnification (either a low magnification or a high magnification), and the photographed image files are displayed as the thumbnails, and among the displayed image files, the user designates individual photographing information concerning the locations and magnifications of samples that the user wishes to photograph among the image files that the user selects, and each part within the sample holding portion is individually photographed in accordance with the locations and magnifications designated by the individual photographing information. Consequently, the system enables automatic photographing at desired locations in each well in the plate.

Further, with this system, simultaneously or in parallel with integratively photographing within each well, the user may photograph at the locations to which the user pays special attention with priority.

The microscope image processing system according to a further aspect of the present invention is the microscope image processing system described above, wherein the individual photographing information designating unit displays an individual photographing information designating screen for allowing the user to designate the individual photographing information on a monitor, and creates the individual photographing information from coordinate information and magnification information that the user designates on the individual photographing information designating screen via an input device.

This system defines the individual photographing information designation in more specific manners. According to this system, the individual photographing information designating screen for allowing the user to designate the individual photographing information is displayed on the monitor, and the individual photographing information is created from coordinate information and magnification information that the user designates on the individual photographing information designating screen via the input device. Consequently, the user can carry out individual photographing by designating desired locations.

Further, the individual photographing information designating screen displayed on the monitor by this system may have a variety of input support functions such as known map viewing functions (keys for moving in 8 directions or 16 directions, buttons for changing magnification settings, and the like), and by use of such functions, the user may designate the individual photographing information.

The microscope image processing system according to a further aspect of the present invention is the microscope image processing system described above, wherein the individual photographing information designating unit automatically determines any one or both of the coordinate information and magnification information for photographing by an image processing procedure and thereby creates the individual photographing information.

This system defines the individual photographing information designation in more specific manners. According to this system, any one or both of the coordinate information and magnification information for photographing are determined automatically by the image processing procedure and thereby the individual photographing information is created. Consequently, the system enables automatic determination of the photographing locations for individual photographing by, e.g., known image processing procedures (for example, gravity center calculation and the like).

Further, the present invention also relates to a microscope image processing method. The microscope image processing method according to the present invention has an integrative photographing step of integratively photographing each sample holding portion of a sample holder at a predetermined magnification with a microscope; a thumbnail displaying step of displaying image files photographed in the integrative photographing step as thumbnails; an individual photographing information designating step of designating individual photographing information concerning the locations and magnifications of samples that a user wishes to photograph, the information corresponding to the image files that the user selects from the image files displayed on the thumbnail displaying unit; and an individual photographing step of photographing each part within the sample holding portion in accordance with the locations and magnifications designated by the individual photographing information.

According to this method, each sample holding portion (for example, each well of a multiwell plate or the like) of the sample holder (for example, a multiwell plate or the like) are integratively photographed by use of the microscope at a predetermined magnification (either a low magnification or a high magnification), and the photographed image files are displayed as the thumbnails, and among the displayed image files, the user designates individual photographing information concerning the locations and magnifications of the samples that the user wishes to photograph among the image files that the user selects, and each part within the sample holding portion is individually photographed in accordance with the locations and magnifications designated by the individual photographing information. Consequently, the method enables automatic photographing at desired locations in each well in the plate.

Further, according to this method, simultaneously or in parallel with integratively photographing within each well, the user may photograph at the locations to which the user pays special attention with priority.

The microscope image processing method according to a further aspect of the present invention is the microscope image processing method described above, wherein the individual photographing information designating step displays an individual photographing information designating screen for allowing the user to designate the individual photographing information on a monitor, and creates the individual photographing information from coordinate information and magnification information that the user designates on the individual photographing information designating screen via an input device.

This method defines the individual photographing information designation in more specific manners. According to this method, the individual photographing information designating screen for allowing the user to designate the individual photographing information is displayed on the monitor, and the individual photographing information is created from coordinate information and magnification information that the user designates on the individual photographing information designating screen via the input device. Consequently, the user can carry out individual photographing by designating desired locations.

Further, the individual photographing information designating screen displayed on the monitor by this method may have a variety of input support functions such as known map viewing functions (keys for moving in 8 directions or 16 directions, buttons for changing magnification settings, and the like), and by use of such functions, the user may designate the individual photographing information.

The microscope image processing method according to a further aspect of the present invention is the microscope image processing method described above, wherein the individual photographing information designating step automatically determines any one or both of the coordinate information and magnification information for photographing by an image processing procedure and thereby creates the individual photographing information.

This method defines the individual photographing information designation in more specific manners. According to this method, any one or both of the coordinate information and magnification information for photographing are determined automatically by the image processing procedure and thereby the individual photographing information is created. Consequently, this method enables automatic determination of the photographing locations for individual photographing by known image processing procedures (for example, gravity center calculation and the like).

Further, the present invention also relates to a program. The program according to the present invention has an integrative photographing step of integratively photographing each sample holding portion of a sample holder at a predetermined magnification with a microscope; a thumbnail displaying step of displaying image files photographed in the integrative photographing step as thumbnails; an individual photographing information designating step of designating individual photographing information concerning the locations and magnifications of samples that a user wishes to photograph, the information corresponding to the image files that the user selects from the image files displayed on the thumbnail displaying unit; and an individual photographing step of photographing each part within the sample holding portion in accordance with the locations and magnifications designated by the individual photographing information.

According to this program, each sample holder portion (for example, each well of a multiwell plate or the like) of the sample holder (for example, a multiwell plate or the like) are integratively photographed by use of the microscope at a predetermined magnification (either a low magnification or a high magnification), and the photographed image files are displayed as the thumbnails, and among the displayed image files, the user designates individual photographing information concerning the locations and magnifications of the samples that the user wishes to photograph among the image files that the user selects, and each part within the sample holding portion is individually photographed in accordance with the locations and magnifications designated by the individual photographing information. Consequently, the program enables automatic photographing at desired locations in each well in the plate.

Further, according to this program, simultaneously or in parallel with integratively photographing within each well, the user may photograph with priority at the locations to which the user pays special attention.

The program according to a further aspect of the present invention is the program described above, wherein the individual photographing information designating step displays an individual photographing information designating screen for allowing the user to designate the individual photographing information on a monitor, and creates the individual photographing information from coordinate information and magnification information that the user designates on the individual photographing information designating screen via an input device.

This program defines the individual photographing information designation in more specific manners. According to this program, the individual photographing information designating screen for allowing the user to designate the individual photographing information is displayed on the monitor, and the individual photographing information is created from coordinate information and magnification information that the user designates on the individual photographing information designating screen via the input device. Consequently, the user can carry out individual photographing by designating desired locations.

Further, the individual photographing information designating screen displayed on the monitor by this program may have a variety of input support functions such as known map viewing functions (keys for moving in 8 directions or 16 directions, buttons for changing magnification settings, and the like), and by use of such functions, the user may designate the individual photographing information.

The program according to a further aspect of the present invention is the program described above, wherein the individual photographing information designating step automatically determines any one or both of the coordinate information and magnification information for photographing by an image processing procedure and thereby creates the individual photographing information.

This program defines the individual photographing information designation in more specific manners. According to this program, any one or both of the coordinate information and magnification information for photographing are determined automatically by the image processing procedure and thereby the individual photographing information is created. Consequently, the program enables automatic determination of the photographing locations for individual photographing by known image processing procedures (for example, gravity center calculation and the like).

Further, the present invention also relates to a recording medium. The recording medium according to the present invention records the program described above.

According to this recording medium, the program recorded in the recording medium is read and executed by a computer. Consequently, the recording medium realizes the program described above by use of the computer, and thereby realizes the same effects as those obtainable by the respective methods.

### BRIEF DESCRIPTION OF THE DRAWINGS

Fig. 1 is a principle structural scheme illustrating a system configuration of the present invention;
Fig. 2 is a block diagram illustrating an example of a system configuration of an image analysis device 100 to which the present invention is applied;
Fig. 3 is a block diagram illustrating an example of a system configuration of an image controlling device 200 to which the present invention is applied;
Fig. 4 is a flow chart illustrating an example of a main processing of the system in the present embodiment;
Fig. 5 is a scheme illustrating an example of a configuration of the system in the present embodiment;
Fig. 6 is an image illustrating an example of a photographing setting screen of an image viewer (user interface) in the present embodiment;
Fig. 7 is a scheme illustrating an example of a process outline of a macro program in the present embodiment;
Fig. 8 is a scheme illustrating an example of a process outline of an image viewer in the present embodiment;
Fig. 9 is a flow chart illustrating a process executed by an initial setting macro program in the present embodiment;
Fig. 10 is a flow chart illustrating an example of a process executed by a calibration macro program in the present embodiment;
Fig. 11 is a flow chart illustrating an example of a process executed by a photographing macro program in the present embodiment;
Fig. 12 is a flow chart illustrating an example of a process executed by an image viewer upon acquiring and browsing images in the present embodiment;
Fig. 13 is a flow chart illustrating an example of a process executed by an image viewer upon individual photographing in the present embodiment;
Fig. 14 is a flow chart illustrating an example of a process executed by an image viewer upon calibration execution in the present embodiment;
Fig. 15 is a flow chart illustrating an example of a process executed by an image viewer upon loading execution of a designated plate ID image in the present embodiment;
Fig. 16 is a flow chart illustrating an example of a process executed by an image viewer upon deletion execution of a photographed image in the present embodiment;
Fig. 17 is a scheme illustrating a process sequence of an example of cooperative actions upon calibration setting;
Fig. 18 is a scheme illustrating a process sequence of an example of cooperative actions upon low magnification integrative photographing;
Fig. 19 is a scheme illustrating a process sequence of an example of cooperative actions upon individual photographing;
Fig. 20 is a flow chart illustrating an example of an initial calibration setting process of the system in the present embodiment;
Fig. 21 is a flow chart illustrating an example of an integrative photographing process of the system in the present embodiment;
Fig. 22 is an image illustrating an example of a thumbnail display screen displayed on a monitor;
Fig. 23 is an image illustrating another example of an individual photographing information designating screen displayed on a monitor;
Fig. 24 is an image illustrating an example of a thumbnail browsing screen of an image viewer (user interface) in the present embodiment;
Fig. 25 is an image illustrating an example of a full size image screen of an image viewer (user interface) in the present embodiment;
Fig. 26 is an image illustrating an example of 2 photographed calibration image files;
Fig. 27 is an image illustrating an example of 2 photographed calibration image files;
Fig. 28 is an image illustrating a case where 2 photographed calibration image files are displayed in an overlaid manner; and
Fig. 29 is an image illustrating an example of an individual photographing information designating screen displayed on a monitor.

### BEST MODE FOR CARRYING OUT THE INVENTION

The microscope image processing system, microscope image processing method, program, and recording medium according to the present invention will be explained hereinbelow in detail with reference to the drawings. The present invention is not limited to the present embodiment.

Particularly in the following embodiments, the present invention will be explained as to the examples of applications to the photographing of the samples and the like arranged in line on a multiwell plate or the like by use of a microscope. However, the present invention is not limited thereto. The present invention may be applied in a similar matter to any cases where a plurality of samples are photographed by a microscope.

### [Outline of the Invention]

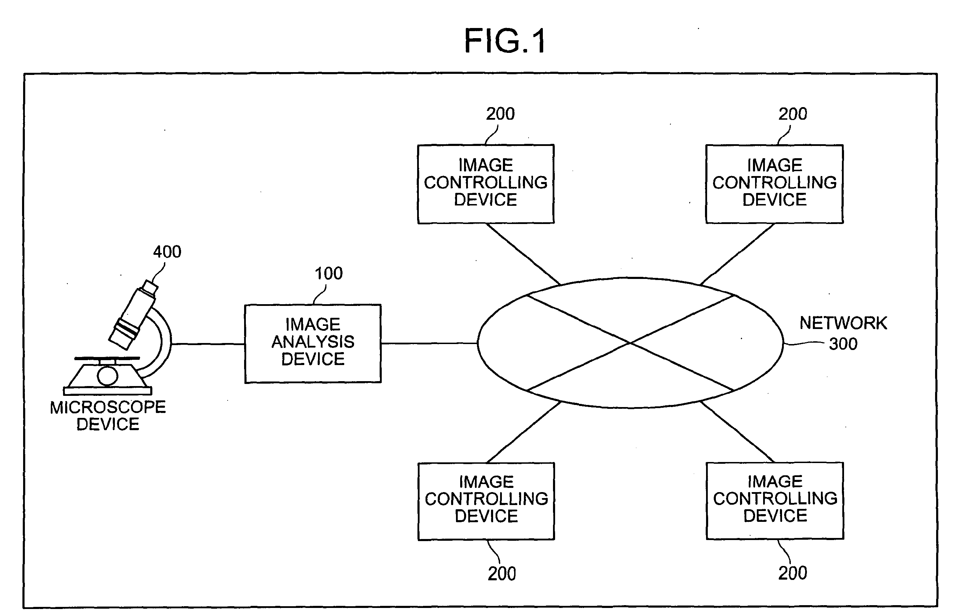

The outline of the present invention will be explained hereinbelow. Subsequently, the structure and processes and the like thereof will be explained in detail. Fig. 1 is a principle structural scheme illustrating the system configuration of the present invention, and conceptually shows only portions related to the present invention among the structure.

Schematically, the present invention has the following characteristics. As shown in Fig. 1, schematically, the microscope image processing system according to the present invention has an image analyzing device 100 that controls a microscope 400 and carries out microscope image photographing, and an image controlling device 200, which are connected to make communications with each other via a network 300 (the image analyzing device 100 and the image controlling device 200 may be configured in one enclosure). The image analyzing device 100 integratively photographs an image within each well at a low magnification. The image controlling device 200 communicates with the image analyzing device 100 via the network 300, acquires the photographed image at the low magnification, and displays the image as thumbnails. An operator designates the locations of samples within each well that the operator wishes to photograph, on the display via the image controlling device 200. The image controlling device 200 informs the image analyzing device 100 of photographing instructions in accordance with the designated conditions. The image analyzing device 100 individually photographs at the locations designated by the image controlling device 200 under the designated photographing conditions.

Upon the integrative photographing by the image analyzing device 100 within each well, the magnification therefor is not limited to a low magnification, but may be an arbitrary magnification (for example, at a high magnification).

Further, the image analyzing device 100 may photograph with priority at the locations to which the operator pays special attention, simultaneously or in parallel with integrative photographing within each well.

Furthermore, the image analyzing device 100 may, e.g., put the images photographed within each well together, to thereby compose a photograph of the entire well at a high resolution.

Further, the image controlling device 200 may input and display images photographed at a high resolution by use of any input support functions depending on the object to be photographed and the purpose of the search. Examples of the functions may include known map viewing functions (for example, well-known map reference functions (for example, keys for moving in 8 directions or 16 directions, buttons for changing magnification settings, and the like)).

For example, when the objects to be observed and photographed are brain sections which are fixed onto each well of a well plate, it is necessary to look over the entire image of sections. With the image analyzing device 100, it becomes possible to take partial photographs and automatically put them together to compose an image of the entire section at a high resolution.

### [System Configuration - Image Analyzing Device 100]

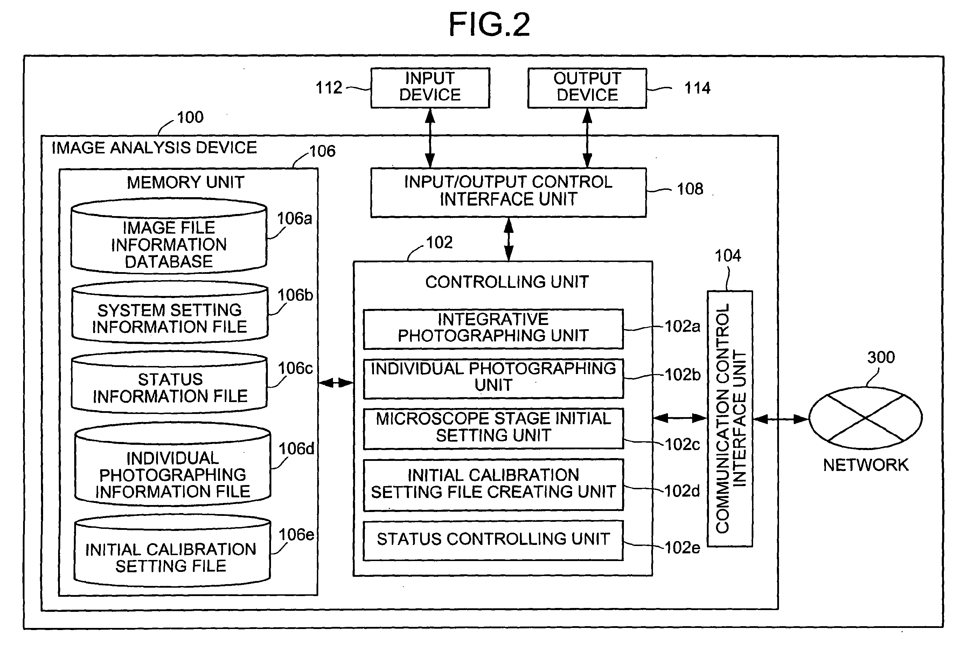

Firstly, the configuration of this system will be explained hereinbelow. Fig. 2 is a block diagram illustrating an example of a system configuration of the image analysis device 100 to which the present invention is applied. Fig 2 conceptually illustrates only portions related to the present invention among all over the system configuration.

As shown in Fig. 2, schematically, the image analyzing device 100 has a controlling unit 102 such as a CPU that generally controls the entire image analyzing device 100, a communication control interface unit 104 connected to a communication device (not shown) such as a rooter connected to a communication line or the like, an input/output control interface unit 108 connected to an input device 112 and an output device 114, and a memory unit 106 that stores a variety of databases and tables and the like. Each component is connected with one another for communication via an arbitrary communication route. Further, this image analyzing device 100 is connected to the network 300 for enabling communication, via a communication device such as a rooter and a wired or wireless communication line such as an exclusive line.

The memory unit 106 storing a variety of databases and tables (image file information database 106a to initial calibration setting file 106e) is a storage unit such as fixed disk devices, and stores a variety of programs and tables, as well as files, databases, web page files and so forth to be used in a variety of processes.

Among these components of the memory unit 106, the image file information database 106a is a database that stores image files (including image ID, image data and the like), and image information (including image ID, plate ID, well ID, coordinate information, magnification information, name of organisms and so forth).

Further, the system setting information file 106b is a unit for storing system setting information that stores microscope hardware configuration information (information concerning the magnification of an objective lens installed and the like), photographing parameter information (information concerning parameters of exposure time, brightness, light source voltage and the like per objective lens), plate format information (multiwell plate arrangement information, and information concerning distances between wells and the like) and so forth.

Further, the status information file 106c stores working conditions per plate (now photographing, now waiting for photographing instructions, and the like) and image information of the photographed image files.

Further, the individual photographing information file 106d stores individual photographing information for setting a variety of conditions for individual photographing such as identification of the well to be photographed, coordinate for location, magnification of the objective lens, manner of individual photographing, and the name of the image to be stored.

Further, the initial calibration setting file 106e stores calibration image files and calibration information files.

Furthermore, in Fig. 2, the communication control interface unit 104 carries out the communication control between the image analyzing device 100 and the network 300 (or a communication device such as a rooter). Namely, the communication control interface unit 104 has a function of data communication with other terminals via a communication line.

Further, in Fig. 2, the input/output control interface unit 108 controls the input device 112 and the output device 114. The output device 114 may include a monitor (including a household TV set), as well as a speaker (the output device 114 may be referred to hereinbelow as a monitor). The input device 112 may include a keyboard, mouse, microphone and the like. Further, the monitor realizes a pointing device function in cooperation with the mouse.

Furthermore, in Fig. 2, the controlling device 102 has an internal memory that stores a control program such as an Operating System (OS), programs specifying a variety of processing procedures and the like, and necessary data. With these programs, the controlling device carries out an information processing for executing a variety of processes. As a functional conception, the controlling unit 102 has an integrative photographing unit 102a, an individual photographing unit 102b, a microscope stage initial setting unit 102c, an initial calibration setting file creating unit 102d, and a status controlling unit 102e.

Among these components, the integrative photographing unit 102a is an integrative photographing unit that integratively photographs each sample holding portion (for example, each well of a multiwell plate or the like) of a sample holder (for example, a multiwell plate or the like) at a predetermined magnification (either a low magnification or a high magnification) by use of a microscope.

Further, the individual photographing unit 102b is an individual photographing unit that photographs each part within the sample holding portion (for example, each well of a multiwell plate and the like) individually in accordance with the location and magnification designated by the individual photographing information.

Further, the microscope stage initial setting unit 102c is a microscope stage initial setting unit that carries out an operation for obtaining the center position of well coordinates of a multiwell plate for hybridization, and making it the origin of coordinates.

Further, the initial calibration setting file creating unit 102d is an initial calibration setting file creating unit that creates an initial calibration setting file.

Furthermore, the status controlling unit 102e is a status controlling unit that controls status information of work progress as to each plate.

Details of processes carried out by these components will be described later.

### [System Configuration - Image Controlling Device 200]

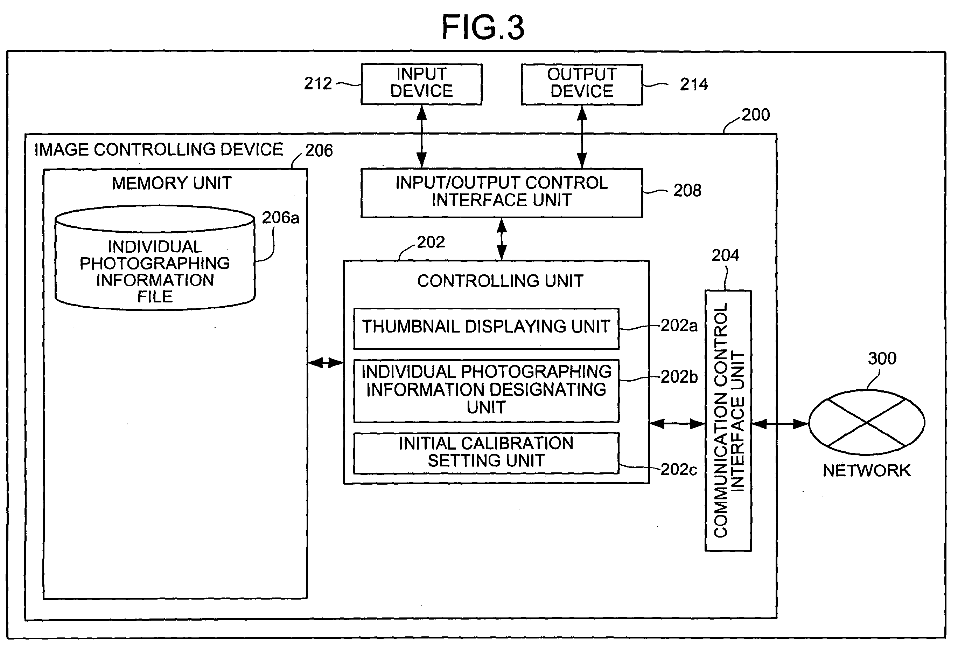

Firstly, the configuration of this system will be explained hereinbelow. Fig. 3 is a block diagram illustrating an example of a system configuration of the image controlling device 200 to which the present invention is applied. Fig. 2 conceptually illustrates only portions related to the present invention among all over the system configuration.

As shown in Fig. 3, schematically, the image controlling device 200 has a controlling unit 202 such as a CPU that generally controls the entire image controlling device 200, a communication control interface unit 204 connected to a communication device (not shown) such as a rooter connected to a communication line or the like, an input/output control interface unit 208 connected to an input device 212 and an output device 214, and a memory unit 206 that stores a variety of databases and tables and the like. Each component is connected with one another for enabling communication via an arbitrary communication route. Further, this image controlling device 200 is connected to the network 300 for enabling communication, via a communication device such as a rooter and a wired or wireless communication line such as an exclusive line.

The memory unit 206 storing a variety of databases and tables (individual photographing information file 206a) is a storage unit such as fixed disk devices, and stores a variety of programs, tables, databases, web page files and so forth to be used in a variety of processes.

Among the components of the memory unit 206, the individual photographing information file 206a is a database that stores individual photographing information designated by a user (including, for example, locations of samples to be photographed (coordinate information) and photographing magnifications and the like).

Further, in Fig. 3, the communication control interface unit 204 carries out the communication control between the image controlling device 200 and the network 300 (or a communication device such as a rooter). Namely, the communication control interface unit 204 has a function of data communication with other terminals via a communication line.

Further, in Fig. 3, the input/output control interface unit 208 controls the input device 212 and the output device 214. The output device 214 may include a monitor (including a household TV set), as well as a speaker (the output device 214 may be referred to hereinbelow as monitor). The input device 212 may include a keyboard, mouse, microphone and the like. Further, the monitor realizes a pointing device function in cooperation with the mouse.

Furthermore, in Fig. 3, the controlling unit 202 has an internal memory that stores a control program such as an Operating System (OS), programs specifying a variety of processing procedures and the like, and necessary data. With these programs, the controlling device carries out an information process for executing a variety of processes. As a functional conception, the controlling unit 202 has a thumbnail displaying unit 202a, an individual photographing information designating unit 202b, and an initial calibration setting unit 202c.

Among these components, the thumbnail displaying unit 202a is a thumbnail displaying unit that displays image files photographed by the integrative photographing unit as thumbnails.

Further, the individual photographing information designating unit 202b is an individual photographing information designating unit that designates individual photographing information concerning the locations and magnifications of samples that the user wishes to photograph. The information corresponds to the image files that the user selects from the image files displayed by the thumbnail displaying unit. The individual photographing information designating unit 202b may display an individual photographing information designating screen for allowing the user to designate individual photographing information on the monitor, and create individual photographing information from the coordinate information and the magnification information that the user has designated via the input device on the individual photographing information designating screen. Further, the individual photographing information designating unit 202b may automatically determine any one or both of the coordinate information and magnification information for photographing by known image processing procedures (for example, gravity center calculation and the like) and thereby create the individual photographing information.

Further, the initial calibration setting unit 202c is an initial calibration setting unit that determines parameters for converting the numbers of pixels on an image viewer into stage movement amounts.

Details of processes carried out by these components will be described later.

### [System Configuration - Network 300]

Subsequently, the configuration of the network 300 is explained. The network 300 has a function to connect the image analyzing device 100 and the image controlling device 200 with each other. The network 300 is, for example, the Internet.

### [Processes by System]

Subsequently, an example of processes carried out by the present system in the present embodiment configured as the above will be explained in detail with reference to the drawings.

### [Initial calibration Setting Process]

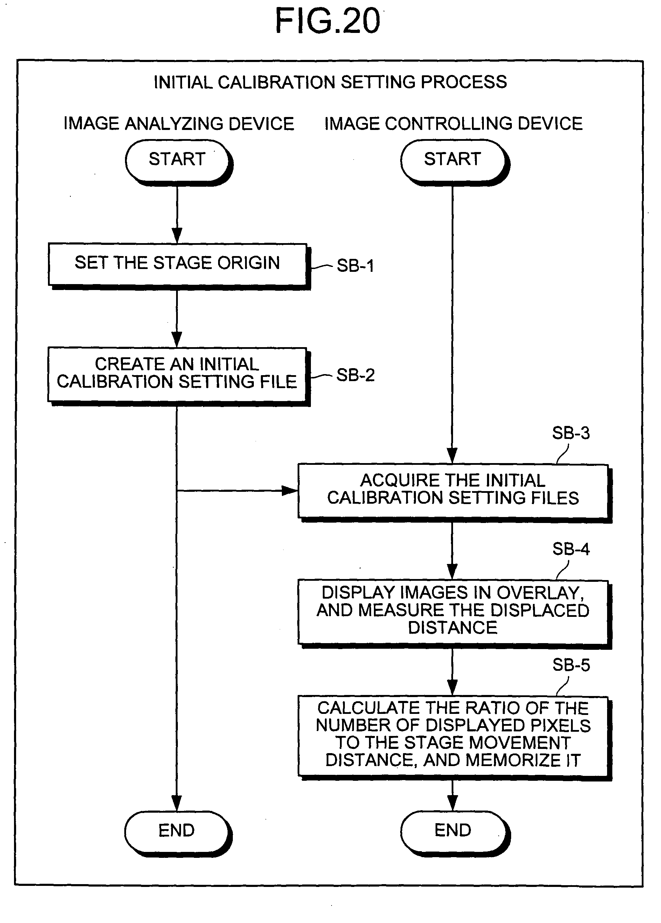

Firstly, details of the initial calibration setting process will be explained with reference to Fig. 20, Fig. 26 to Fig. 28 and so forth. Fig. 20 is a flow chart illustrating an example of the initial calibration setting process of the system in the present embodiment.

By the processing in the microscope stage initial setting unit 102c, the image analyzing device 100 carries out an operation for obtaining the center position of the well coordinates as the reference of a multiwell plate, and for defining the center position as the origin of coordinates (step SB-1). Specifically, when the user sets a multiwell plate on a microscope device 400, the microscope stage initial setting unit 102c sets the center point of the standard well (for example, the first well) as the origin.

Subsequently, by the processing in the initial calibration setting file creating unit 102d, the image analyzing device 100 creates an initial calibration setting file (step SB-2). Specifically, when the user sets a multiwell plate for the initial calibration setting (for example, a plate having an image for adjustment such a cross hair or the like drawn at the center of the first well) on the microscope device 400, the initial calibration setting file creating unit 102d photographs two images for adjustment, while displacing xy coordinates. Then, the initial calibration setting file creating unit 102d combines a pair of photographed image files (calibration image files) which is further combined with a calibration information file containing, e.g. the coordinate information thereof, to constitute initial calibration setting files 106e.

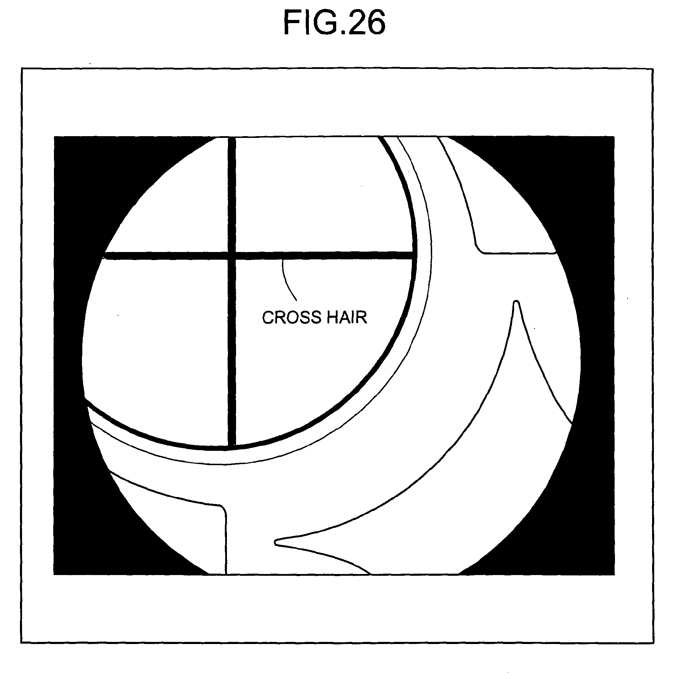

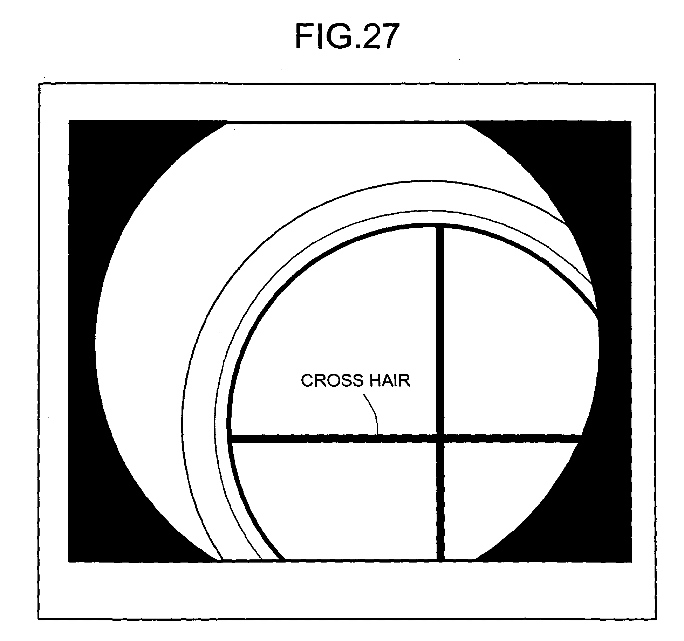

Fig. 26 and Fig. 27 are images illustrating an example of the pair of photographed calibration image files. The pair of images shown in Fig. 26 and Fig. 27 is a pair of images of the same initial calibration setting multiwell plate photographed by the initial calibration setting file creating unit 102d while displacing the plate by 3mm in the x direction, and 3mm in the y direction. The initial calibration setting file creating unit 102d stores the file names of these two images, the magnification of the objective lens used in photographing, and information concerning the actual distance between the two images, into the calibration information file of the initial calibration setting files 106e.

Back to Fig. 20 again, by the processing in the initial calibration setting unit 202c, the image controlling device 200 acquires the initial calibration setting files 106e from the image analyzing device 100 (step SB-3).

Then, by the processing in the initial calibration setting unit 202c, the image controlling device 200 displays the two calibration image files included in the acquired initial calibration setting files in an overlaid manner, and measures the distance of displacement (number of displayed pixels) between the two images for adjustment (step SB-4).

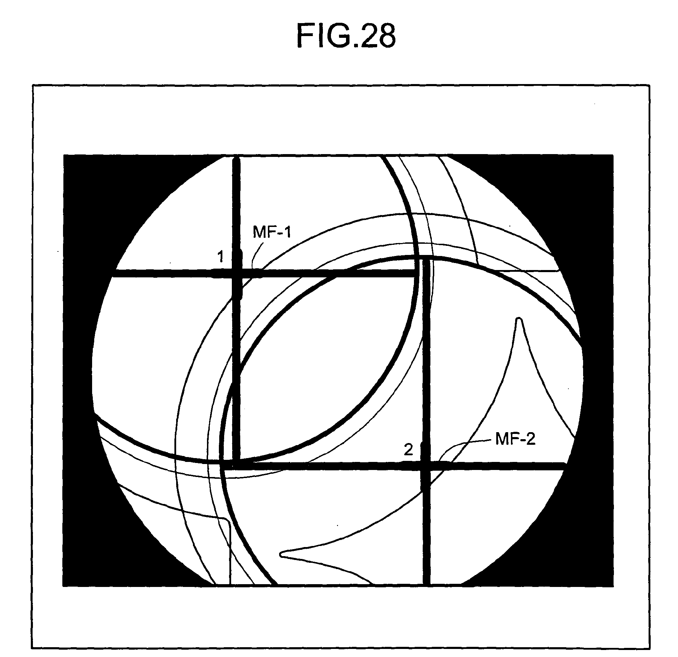

Fig. 28 is an image illustrating an instance of the overlaid display of the two calibration image files. The operator designates the center points of the cross hairs displayed on the two calibration image files by use of the mouse (MF-1 and MF-2), and the initial calibration setting unit 202c measures the number of pixels between the two center points.

Alternatively, the initial calibration setting unit 202c may automatically or manually displace one image file so that the position of the displayed cross hairs of one image file matches the other, and then measure the number of pixels in the displacement distance.

Back to Fig. 20 again, by the processing in the initial calibration setting unit 202c, the image controlling device 200 calculates the ratio of the number of displayed pixels with respect to the stage movement distance, based on the displacement distance (number of displayed pixels) between the images for adjustment, and the difference along the xy coordinates in the calibration information file (stage movement distance), and stores the calculated ratio into a predetermined memory area of the memory unit 206 (step SB-5) as a parameter for converting the number of pixels on the image viewer into the stage movement distance.

Thereby, the initial calibration setting process is completed.

### [Main Process]

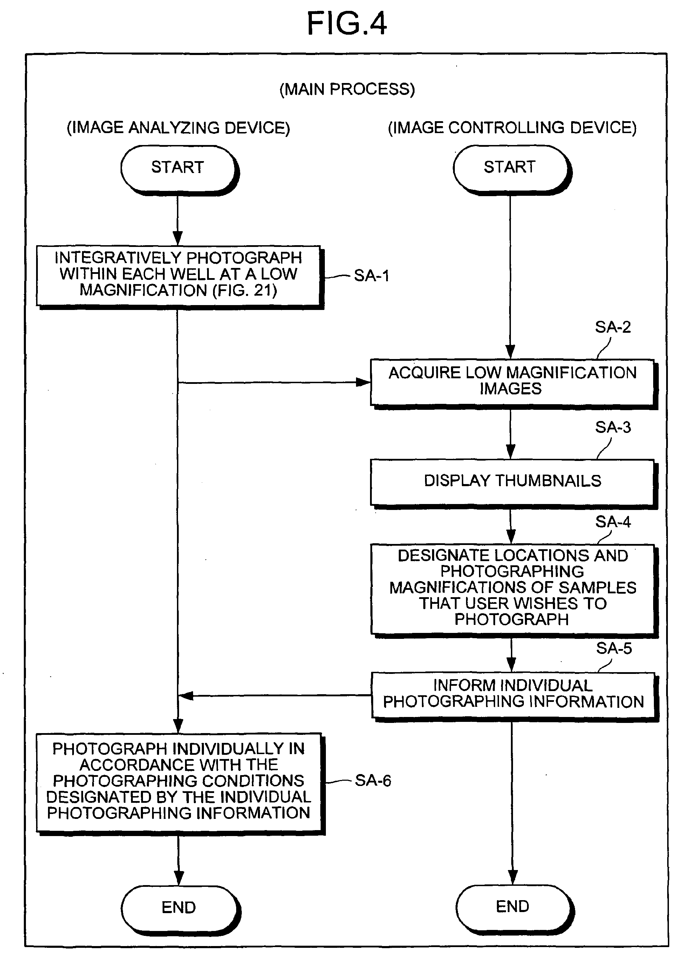

Subsequently, details of the main process will be explained with reference to Fig. 4, Fig. 21 to Fig. 23 and so forth.

Fig. 4 is a flow chart illustrating an example of the main process of the system in the present embodiment.

By the processing in the integrative photographing unit 102a, the image analyzing unit 100 integratively takes a photograph within each well at a low magnification by use of the microscope device 400 (step SA-1).

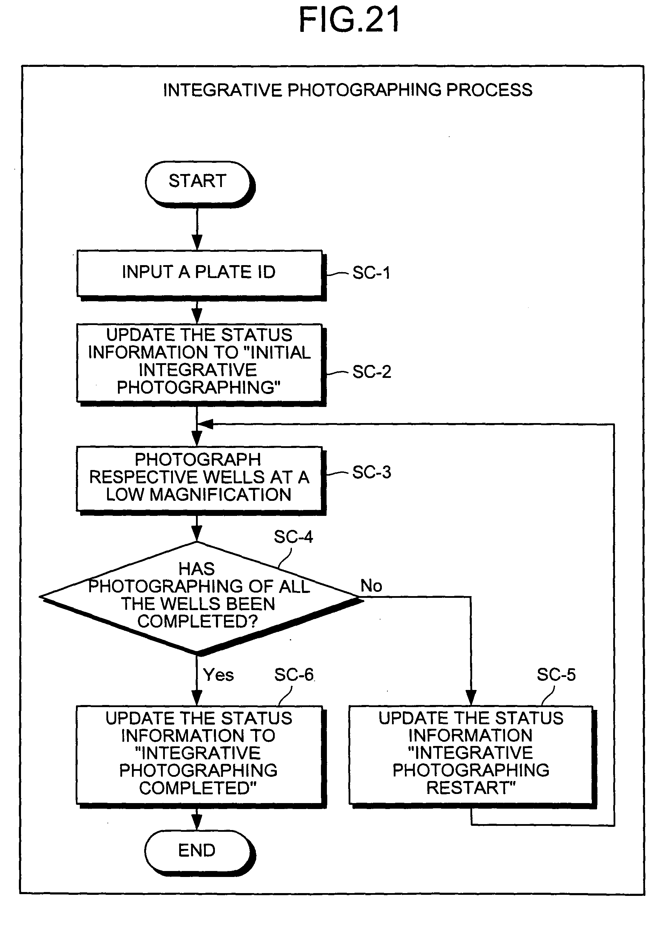

Fig. 21 is a flow chart illustrating an example of the integrative photographing process of the system in the present embodiment.

By the processing in the status controlling unit 102e, the image analyzing device 100 displays a plate ID input screen on the monitor, and prompts the user to input a plate ID (step SC-1). Then, by the processing in the status controlling unit 102e, the image analyzing device 100 stores the plate ID that the user has input into a predetermined memory area for the status information file 106c.

Subsequently, by the processing in the status controlling unit 102e, the image analyzing device 100 accesses the status information file 106c, and updates the status information of the plate ID to "initial integrative photographing" (step SC-2).

Subsequently, by the processing in the integrative photographing unit 102a, the image analyzing device 100 sequentially photographs each well at a low magnification from the first well of the multiwell plate set on the microscope device 400 (step SC-3).

Subsequently, by the processing in the integrative photographing unit 102a, the image analyzing device 100 judges whether photographing of all the wells has been completed, upon completing photographing of one image or a predetermined number of images (step SC-4). If the photographing of all the wells has not been completed yet, the status controlling unit 102e accesses the status information file 106c and updates the status information of the plate ID to "integrative photographing restart" (step SC-5), and goes back to the step SC-3, and continues photographing the rest of the wells.

On the other hand, if the photographing of all the wells has been completed in the step SC-4, the image analyzing device 100 accesses the status information file 106c by the processing in the status controlling unit 102e, and updates the status information of the plate ID to "integrative photographing completed" (step SC-6).

In this manner, when the integrative photographing of the multiwell plate has not been completed for any reason, the status information of the plate ID is set to "integrative photographing restart". Therefore, when the integrative photographing process is carried out next time, only the wells that have not been photographed yet will be photographed.

Back to Fig. 4 again, by the processing in the thumbnail display unit 202a, the image controlling device 200 acquires photographed image files and image information from the image analyzing device 100 via the network 300 (step SA-2), and displays them as thumbnails on the monitor (step SA-3).

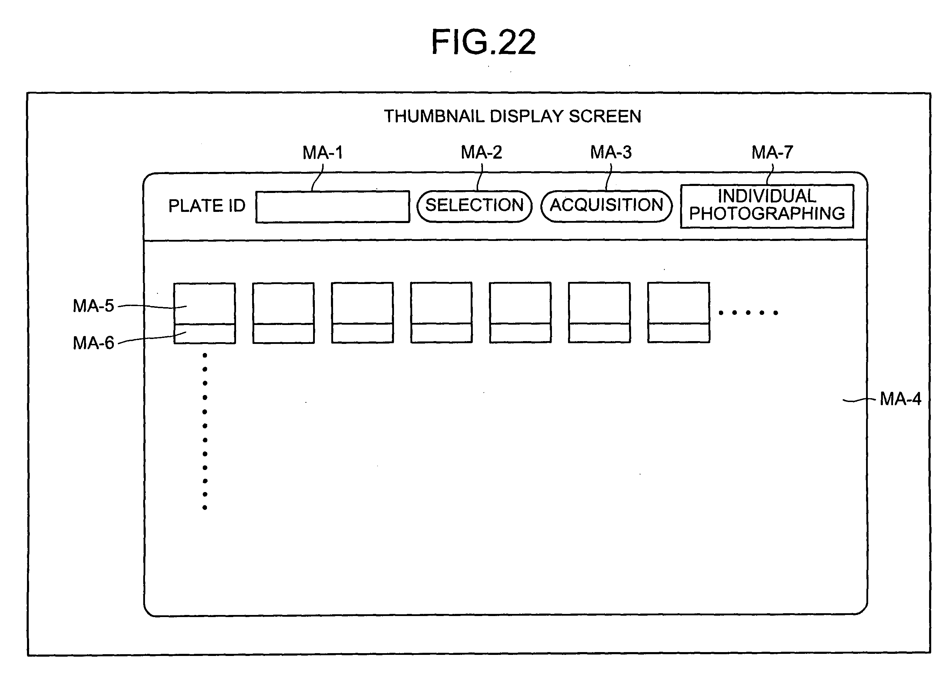

Fig. 22 is an image illustrating an example of the thumbnail display screen displayed on the monitor. As shown in Fig. 22, the thumbnail display screen has a plate ID input area MA-1, a plate ID selection button MA-2, a thumbnail image acquisition button MA-3, a thumbnail image display area MA-4, and an individual photographing button MA-7.

In Fig. 22, when the user inputs a desired plate ID in the plate ID input area via the input device 212, and selects the thumbnail image acquisition button MA-3 by, e.g., clicking it by the mouse, the thumbnail display area 202a displays low magnification images (MA-5) of each well integratively photographed corresponding to the plate ID, and related information such as well ID's (MA-6) on the thumbnail image display area MA-4.

Further, when the user selects the plate ID selection button MA-2 via the input device 212 by, e.g., clicking it by the mouse, the thumbnail display area 202a opens a window that displays a list of plate ID's.

Back to Fig. 4 again, by the processing in the individual photographing information designating unit 202b, the image controlling device 200 prompts the user to select the desired image files among the image files displayed as thumbnails on the monitor.

Then, by the processing in the individual photographing information designating unit 202b, the image controlling device 200 displays an individual photographing information designating screen for allowing the user to designate individual photographing information concerning the locations and photographing magnifications of samples that the user wishes to photograph among the image files that the user selects on the monitor (step SA-4).

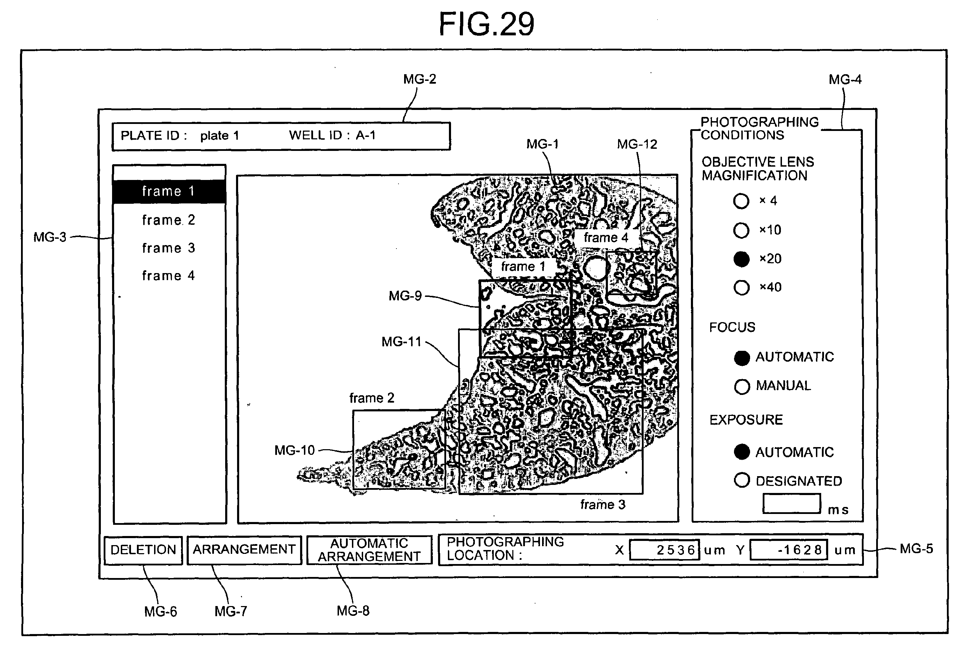

Fig. 29 is an image illustrating an example of the individual photographing information designating screen displayed on the monitor. As shown in Fig. 29, the individual photographing information designating screen has an image display area MG-1 that the user selects, an information-display area MG-2 concerning image files such as plate ID's and well ID's and the like, an individual photographing frame list display area MG-3 set associated with the selected images, a photographing condition display area MG-4, a photographing location information display area MG-5, an individual photographing deletion button MG-6, an individual photographing frame arrangement button MG-7, and an individual photographing frame automatic arrangement button MG-8.

The photographing frame list display area MG-3 at the left of the screen displays a list of individual photographing frames associated with the selected image files. Further, respective photographing frame information items (MG-9 to MG-12) are displayed in an overlaid manner on the image display area. Thereby, the user can confirm the list of photographing frame information individual photographing set thereto.

When the user selects a desired item corresponding to the photographing frame information from the photographing frame list display area MG-3, or directly selects one of the photographing frame information items (MG-9 to MG-12) on the image display area (MG-1), photographing conditions and location information concerning the photographing frame information of the selected individual photographing are displayed on the photographing condition display area MG-4, and the photographing location information display area MG-5 at the right of the screen respectively.

In the example in Fig. 29, photographing frame information is set as to four individual photographing operations (magnifying power of 10 x 1 (MG-11), magnifying power of 20 x 2 (MG-9 and MG-10), magnifying power of 40 x 1 (MG-11)), and the frame 1 (MG-9) is selected by the user.

Further, while the photographing frame information as to the respective individual photographing operations is selected, the user may edit and select the photographing condition display area MG-4, and the photographing location information display area MG-5 for arbitrary modifying them. The photographing locations may be changed by the user through, e.g., directly moving them by dragging photographing frame information items on the image display area (MG-1).

Further, while the photographing frame information is selected, the user may delete desired photographing frame information items, by selecting the individual photographing deletion button MG-6.

Further, while the photographing frame information is not selected, the user may create a new photographing frame information item, by editing the photographing condition display area MG-4, and selecting the arrangement button MG-7, or the automatic arrangement button MG-8. When the user selects the arrangement button MG-7, the user may designate desired photographing locations on the image. On the other hand, when the user selects the automatic arrangement button MG-8, photographing frame information is automatically arranged at the gravity center position of a desired image by use of an existing image processing procedure.

Further, photographing conditions to each individual photographing may be set arbitrary per photographing frame information via the photographing condition display area MG-4. The "objective lens magnification" of the photographing condition display area MG-4 is used for selecting an objective lens magnification to be used in photographing. Upon executing individual photographing, the image analyzing device 100 switches the objective lens to the specified one designated in the above procedure, for carrying out the photographing. The "focus" of the photographing condition display area MG-4 is used for selecting automatic or manual adjustment of the Z axis. Upon carrying out the Z axis adjustment in "automatic" manners, the image analyzing device 100 takes images while displacing the Z axis, and finds out the most appropriate Z coordinate for the execution of the photographing. The automatic focus function to be employed in this procedure may be any function that a number of commercially available microscope devices and the image analyzing devices attached thereto are equipped with. On the other hand, when a "manual" focusing is chosen, the image analyzing device 100, at execution of individual photographing, moves to predetermined X and Y coordinates, and stops there temporarily and displays a message to prompt the user to set the focus. The user operates the microscope device 400 and adjusts Z coordinates, and informs the image analyzing device 100 of "individual photographing restart". The "exposure" of the photographing condition display area MG-4 is for setting the exposure time for photographing, and whether to determine the exposure in "automatic" manners, or to use a "designated" exposure time may be selected thereby. The "photographing location" of the photographing condition display area MG-4 takes the distance from the origin as a coordinate value. In the example in Fig. 29, the photographing location is displayed in unit of micrometer.

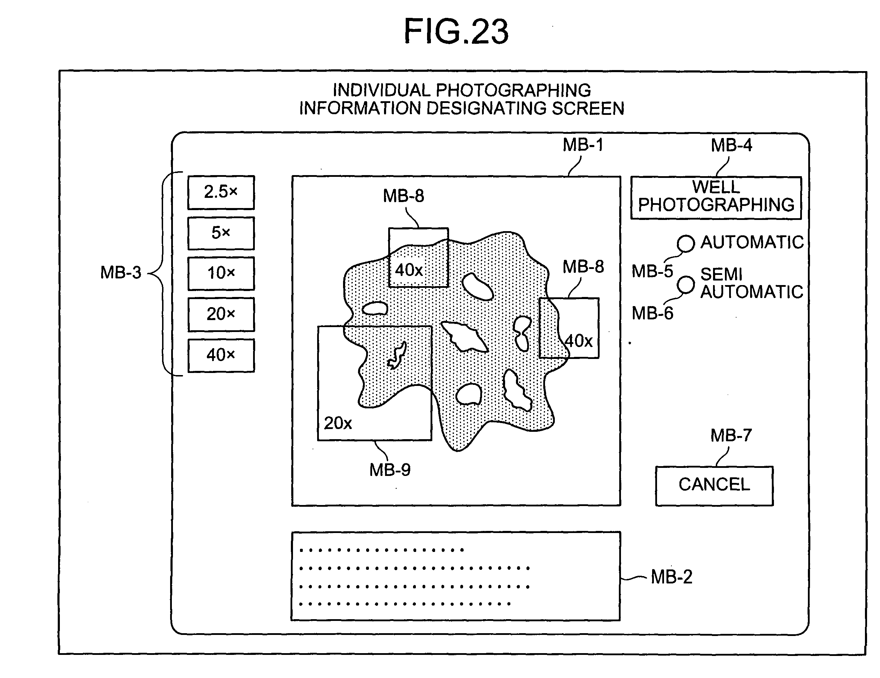

Further, Fig. 23 is an image illustrating another example of the individual photographing information designating screen displayed on the monitor. As shown in Fig. 23, the individual photographing information designating screen has an image file display area MB-1 that has been chosen by the user, an information display area MB-2 concerning image files such as plate ID's and well ID's and the like, a magnification designation button MB-3 for designating magnifications at individual photographing, a well photographing button MB-4, an automatic button MB-5 for selecting automatic photographing mode, a semi automatic button MB-6 for selecting semi automatic photographing mode in which the user can adjust magnifications and photographing locations and the like, a cancel button MB-7 for canceling a process and so forth.

In Fig. 23, when the user selects a desired one of the magnification designation button MB-3 via the input device 212 by, e.g., clicking it by the mouse, the individual photographing information designating unit 202b displays the photographing frame information corresponding to the selected magnification in an overlaid manner on the image file display area MB-1. In the example shown in Fig. 23, two photographing frame information MB-8 corresponding to magnifying power of 40, and one photographing frame information MB-9 corresponding to magnifying power of 20 are shown. Therein, the user may designate photographing locations (coordinate information) by moving the displayed photographing frame information via the input device 212.

Further, when the user selects the automatic button MB-5 or the semi automatic button MB-6 via the input device 212, the individual photographing information designating unit 202b assembles the photographing locations (coordinate information) that the user designates, magnification information, and photographing mode information indicating either automatic photographing or semi automatic photographing, to create individual photographing information.

Further, when the user selects the well photographing button MB-4 via the input device 212, it is possible to carry out photographing based on the individual photographing information corresponding to the well displayed on the screen. Namely, before individual photographing is carried out based on the individual photographing information designated as to all the wells, it is possible to carry out real-time photographing based on the individual photographing information designated as to the displayed well.

Then, by the processing in the individual photographing information designating unit 202b, the image controlling device 200 informs the individual photographing information to the image analyzing device 100 (step SA-5). When the well photographing button MB-4 is selected in Fig. 23, the subsequent steps are carried out per designated well. On the other hand, when the well photographing button MB-4 is not selected, steps for all of the wells whose individual photographing information is set are executed following the selection of the individual photographing button MA-7 shown in Fig. 22.

Then, by the processing in the individual photographing unit 102b, the image analyzing device 100 individually photographs at the locations designated by the individual photographing information informed from the image controlling device 100 at the designated magnifications, with controlling the microscope device 400 in accordance with the photographing conditions including the designated photographing modes (automatic, semi automatic) and the like (step SA-6).

Upon the integrative photographing by the image analyzing device 100 within each well, the magnification therefor is not limited to a low magnification, but may be an arbitrary magnification (for example, a high magnification).

Further, the image analyzing device 100 may photograph with priority at the locations to which the operator pays special attention, simultaneously or in parallel with integratively photographing within each well.

Furthermore, the image analyzing device 100 may, e.g., put the images photographed within each well together, to thereby compose a photograph of the entire well at a high resolution.

Further, the image controlling device 200 may input and display images photographed at a high resolution by use of any input support functions depending on the object to be photographed and the purpose of the search. Examples of the functions may include known map viewing functions (for example, well-known map reference functions (for example, keys for moving in 8 directions or 16 directions, buttons for changing magnification settings, and the like)).

For example, when the objects to be observed and photographed are brain sections which are fixed onto each well of a well plate, it is necessary to look over the entire image of sections. With the image analyzing device 100, it becomes possible to take partial photographs and automatically put them together to compose an image of the entire section at a high resolution.

Thereby, the main process is completed.

### [Embodiment : Plate Photographing Process in Hybridization Experiment]

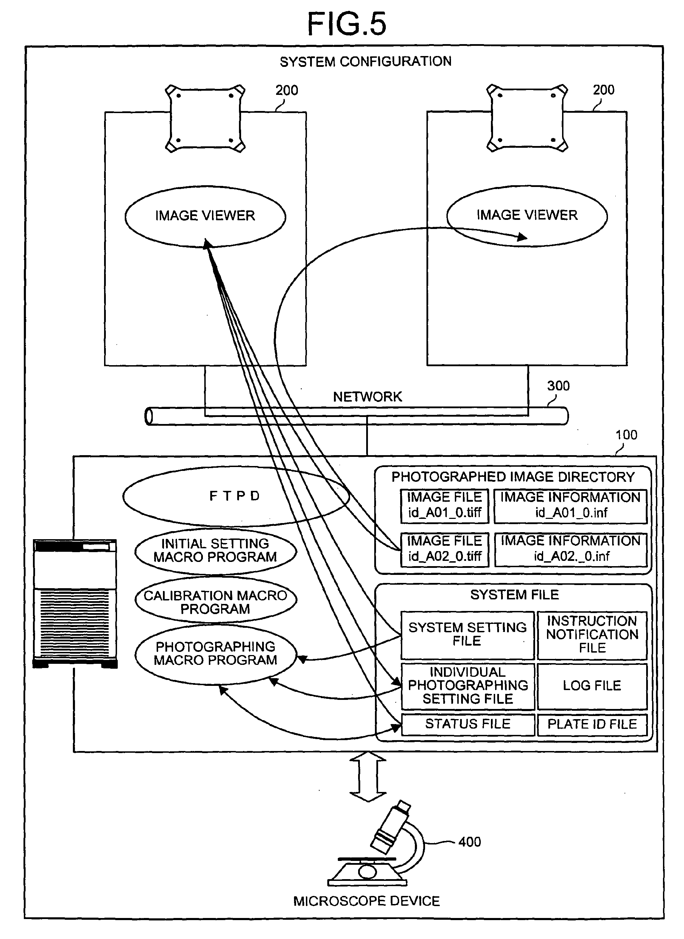

Subsequently, details of an embodiment in the case of photographing a multiwell plate in hybridization experiment will be explained with reference to Fig. 5 through Fig. 19 and so forth.

The embodiment to be discussed is an example where, in a multiwell plate photographing process of hybridization experiment, photographing work is efficiently assisted in cooperation with a microscope system (DM-IRE2) (product name) manufactured by Leica Microsystems (company name).

### [Configuration of Embodiment]

Fig. 5 is a scheme illustrating an example of a configuration of the system in the present embodiment. In this figure, an image analyzing device 100 has an initial setting macro program (corresponding to the microscope stage initial setting unit 102c in Fig. 2), a calibration macro program (corresponding to the initial calibration setting file creating unit 102d in Fig. 2), a photographing macro program (corresponding to the integrative photographing unit 102a, the individual photographing unit 102b, and the status controlling unit 102e in Fig. 2), an FTPD (corresponding to the communication control interface unit 104 in Fig. 2), a photographing image directory (corresponding to the image file information database 106a in Fig. 2), and system files (corresponding to the system setting information file 106b, the status information file 106c, the individual photographing information file 106d and the like, in Fig. 2) and so forth.

In Fig. 5, the system files of the image analyzing device 100 have a plate ID file, a status file, a log file, an individual photographing setting file, an instruction notification file, a system setting file and so forth. Herein, the plate ID file stores an ID of the plate now under working (current ID). The status file stores working conditions per plate (now photographing, waiting for photographing instructions, and the like) and photographed image file information. The log file stores an action log of controlling unit which is a file for debugging, and is not essentially necessary for actions of the system. The individual photographing setting file stores information for photographing, such as identification of the well to be photographed, coordinate for location, magnification of the objective lens, manner of individual photographing and the name of the image to be stored. The instruction notification file is a file for synchronizing the start of individual photographing. The system setting file stores microscope hardware configuration information (the magnification of installed objective lens and the like), photographing parameters (exposure time, brightness, light source voltage and the like for each objective lens), and plate format information (multiwell plate arrangement information, distance between wells, and so forth).

An image controlling device 200 plays a role of a user interface as an image viewer (image browsing, photographing assistance viewer). Further, the image viewer has a program for image browsing and photographing assistance (corresponding to the thumbnail display area 202a, the individual photographing information designating unit 202b, and the initial calibration setting unit 202c in Fig. 3), and files (corresponding to the individual photographing information file 206a in Fig. 3) and so forth.

Further, a network 300 has a function to connect the image analyzing device 100 and the image controlling device 200 with each other, and is, for example, a Local Area Network (LAN).

Further, a microscope device 400 is a microscope device that photographs samples under the control of the image analyzing device 100. In the present embodiment, the microscope is one of the components of a microscope system (DM-IRE2) (product name) manufactured by Leica Microsystems (company name).

### [Outline of Embodiment]

### 1. Initial Setting

When the sort of plate is changed, the following setting procedures are then carried out.

### (1) Initialization of Microscope Stage

The center position of well coordinates of a hybridization multiwell plate is calculated, which is then set as the origin of coordinates. This is executed by starting an exclusive macro program therefor.

### (2) Calibration of Image Viewer

A parameter for converting pixels on the image viewer into stage movement amount is determined. An exclusive macro program therefor is started, and information files and images are created, then calibration is carried out by use of the calibration function of the image viewer.

### 2. Plate Photographing

Photographing is carried out in the following two phases.
(1) Low Magnification Integrative Photographing
   All of the wells in a plate are automatically photographed at a low magnification at a high speed. This is a preparatory stage for individual photographing.
(2) Individual Photographing
   Photographing is carried out on a designated well in accordance with the designation of magnifications and locations. A plurality of photographing locations may be designated for one well, and photographing magnification and photographing location may be set for each location. By designating a low magnification lens, images for "low magnification integrative photographing" may be re-taken. In the individual photographing, there are two alternatives of photographing modes, i.e., "automatic" and "semi automatic". The mode may be chosen for each photographing location. With the "semi automatic" mode, the user may carry out photographing by making fine adjustment of focus, illumination, and location manually. Individual photographing may be carried out repeatedly until the macro program is completed.

### 3. Image Browsing and Individual Photographing Instructions

The photographed images and individual photographing instructions to the photographing macro program may be browsed with an image viewer application. Responding to input of the plate ID, the image viewer carries out actions depending on the state of work of the plate ID. When the plate ID corresponds to the plate currently set in the microscope, photographed images are acquired sequentially and displayed, with which individual photographing settings and photographing instructions may be given. When the plate ID corresponds to the plate which is not currently set in the microscope, image stored at a local may be displayed and browsed.

### 4. Cooperation between Macro and Viewer

The macro program and the image viewer carry out cooperative actions via files. The files (communication files, setting files, and image files) in the microscope system (DM-IRE2) (product name) are all placed in a directory accessible via FTP, and the image viewer accesses these files via FTP. With regard to an access from an FTP client, limitation may be imposed by an FTP server. Depending on the setting thereof, a plurality of clients operating image viewers may access the microscope system (DM-IRE2) (product name) at the same time.

### 5. Interruption and Restart of Photographing Process

The macro program records the status of the process in its status file. Upon starting the program, the program reads the status. If the work had been interrupted during the low magnification integrative photographing work, the macro program carries out its process from the continuation thereof (recovery process). If the work had been interrupted during waiting for individual photographing instructions, or during the photographing, the macro program restarts the work in the status of waiting for individual photographing instructions.

### 6. Completely Manual Process

Photographing may be carried out manually, without using the macro program. Photographed images are stored in a storage directory with file names in the same format as those of the files stored by the macro program, and when a plate ID is input from the image viewer, image files are loaded and displayed on the image viewer.

An operation script in the present embodiment will be explained hereinbelow.
(1) The user sets a plate onto the microscope, and starts the photographing macro program. The user inputs a plate ID.
(2) The macro program automatically carries out low magnification integrative photographing.
(3) The operator inputs a plate ID to the image viewer, or designates a current ID.
(4) The image viewer accesses the microscope system (DM-IRE2) (product name) server via FTP, and if there is any new file, then the image viewer transfers it to the local.
(5) The image viewer reads the status file, and carries out the actions depending on the working status of the macro program. If the macro program is in photographing actions, the image viewer monitors the status file, sequentially transfers the photographed image files, creates their thumbnails and displays them in a list.
(6) The user, while looking at low magnification photographing images in a full size window, carries out settings of individual photographing. A plurality of designations of magnifications and photographing areas may be set per well. After completion of the settings, the user issues instructions for starting the individual photographing.
(7) The macro program, monitoring the instruction notification file, waits for individual photographing instructions. At confirmation of the photographing instructions, the macro program acquires the photographing settings from files, and re-photographs the well individually.
(8) The image viewer, monitoring the status file, sequentially acquires the photographed images and displays them.
(9) The user repeats the procedures (6), (7) and (8).
(10) The user stops the execution of the macro program and completes the photographing work.

That is the end of the explanation of the outline of the embodiment.

### [Display Screen of Embodiment]

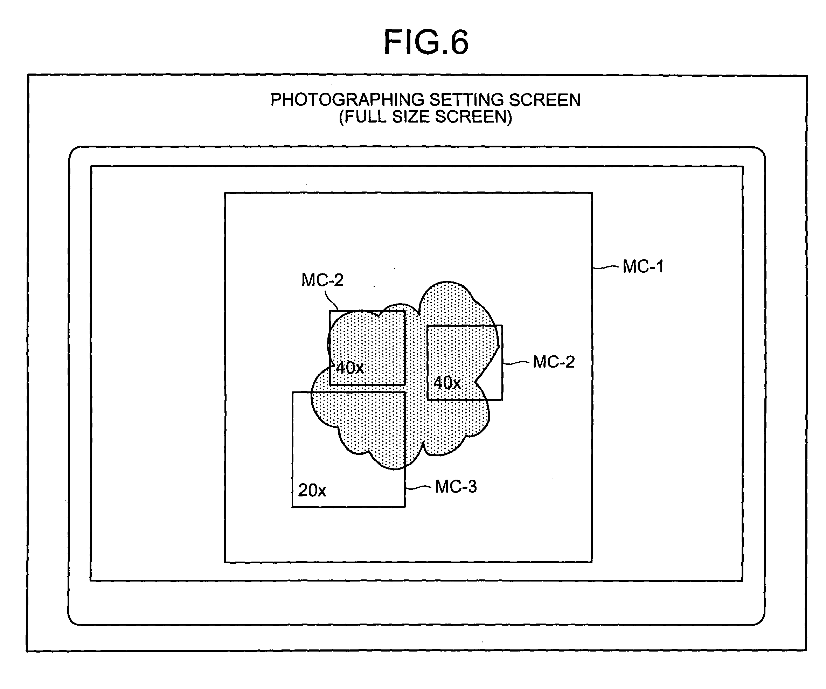

Fig. 6 is an image illustrating an example of a photographing setting screen of the image viewer (user interface) in the present embodiment. The photographing setting screen of the image viewer has a display area MC-1 of the image that the user selects, and photographing frame information corresponding to already set individual photographing displayed in an overlaid manner on the image file display area MC-1 (in the example shown in Fig. 6, photographing frame information MC-2 corresponding to magnifying power of 40, and photographing frame information MC-3 corresponding to magnifying power of 20 are displayed).

The photographing setting screen of the image viewer displays an image taken by the low magnification integrative photographing in full size (the settings of individual photographing are available only on this screen). When the user drags the mouse, a frame depending on the photographing magnification is displayed. Then, the user drags the frame to designate the locations at which he wishes to photograph. When the user completes the settings of the photographing locations of all the necessary wells, the user presses the photographing button to photograph them. After completion of photographing, the user may carry out photographing a plurality of times by changing conditions. Further, the user may set a plurality of photographing orders as to one well in one photographing sequence.

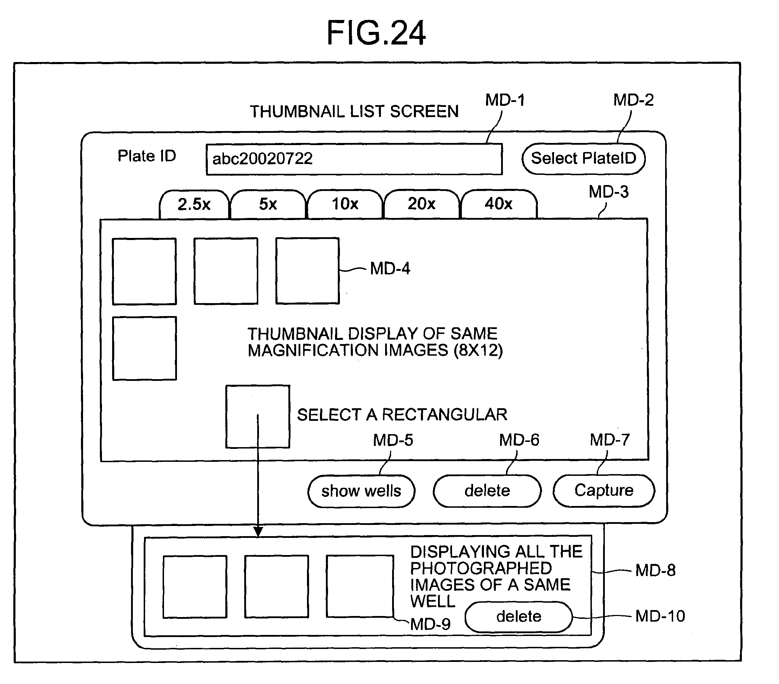

Fig. 24 is an image illustrating an example of a thumbnail browsing screen of the image viewer (user interface) in the present embodiment. The thumbnail browsing screen of the image viewer has a plate ID input area MD-1, a plate ID selection button MD-2, a thumbnail display area MD-3, an image MD-4 displayed on the thumbnail display area MD-3, a well display button MD-5 for displaying thumbnails of all the images photographed on the same well, a delete button MD-6 for deleting all the images photographed in a selected well, a capture button MD-7 for starting individual photographing, an image display area MD-8 for displaying all the photographed images of the same well, an image MD-9 displayed on the image display area MD-8, and a delete button MD-10 for deleting images selected among the images displayed on the image display area MD-8.

The user inputs a desired plate ID in the plate ID input area MD-1 via an input device 212, or the user selects the plate ID selection button ("Select Plate ID" button) MD-2 on the thumbnail list screen on the image viewer by, e.g., clicking it by the mouse, and inputs (selects) the plate ID in the window displaying a list of plate ID's, opened by the processing in the thumbnail displaying unit 202a. Then, when the user selects one of magnification selection tabs (in the example in Fig. 24, magnifying powers of 2.5, 5, 10, 20 and 40 may be designated), photographed images (images MD-4) of the same magnification photographed in each well are displayed as thumbnails on the thumbnail display area MD-3 (when there are a plurality of images of the same magnification in the same well, the thumbnail of the latest image is displayed).

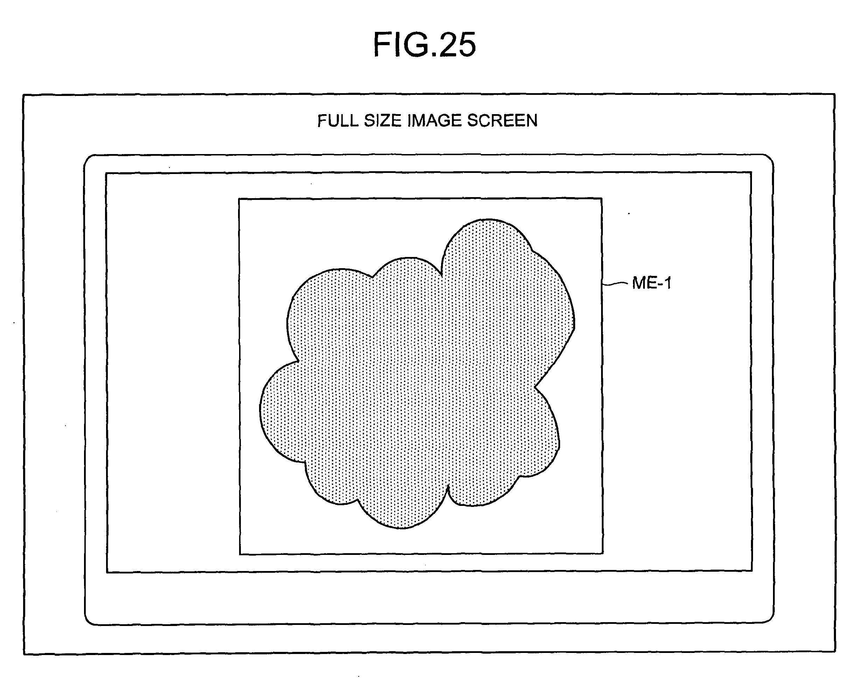

When the user selects the thumbnail, and presses the well display button ("show wells" button) MD-5, a sheet (image display area MD-8) opens, and thumbnails (images MD-9) of all the images photographed on the same well are displayed on the sheet. Herein, when the user selects one of the thumbnails on the sheet, the image is displayed on a full size screen (image display area ME-1 in Fig. 25 to be described later). When the user selects one of the thumbnails on the sheet, and presses the delete button ("delete" button) MD-10, only the selected one image is deleted.

When the user selects one of the thumbnails (images MD-4), and presses the delete button ("delete" button) MD-6, all the images of the selected well and magnification are deleted. Then, the user carries out photographing settings, and presses the capture button MD-7, to initiate individual photographing.

Fig. 25 is an image illustrating an example of a full size image screen of the image viewer (user interface) in the present embodiment. The full size image screen of the image viewer has an image display area ME-1.

The user may switch and display images of the same magnification of other wells on the full size image screen of the image viewer, by the cursor keys of the input device 212. Alternatively, the user may switch and display a plurality of images of the same well photographed at different magnifications on the full size image screen of the image viewer, by pressing both the shift key and the cursor key of the input device 212.

That is the end of the explanation of the display screen of the embodiment.

### [Process Outline of Embodiment]

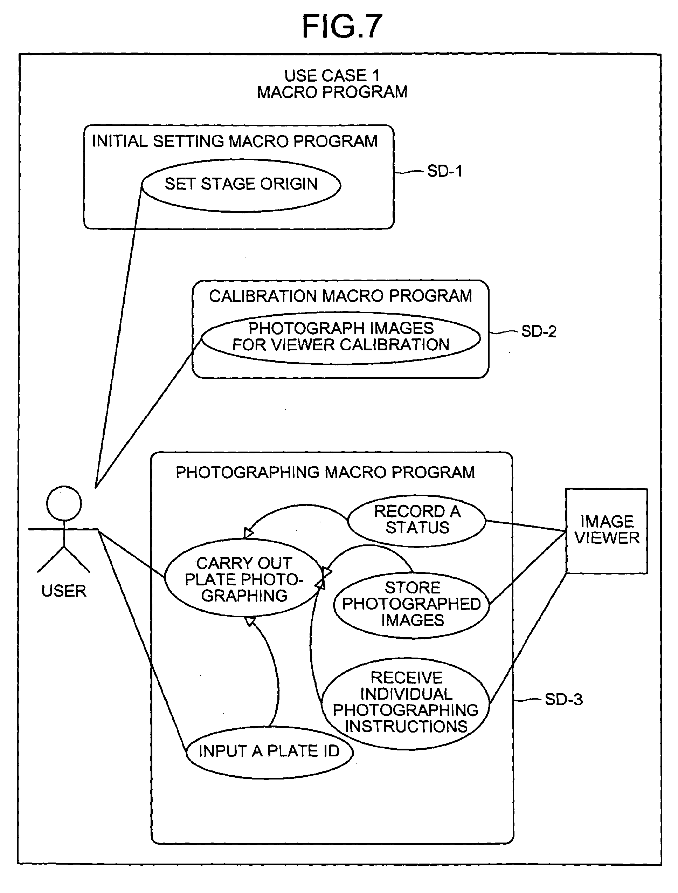

Fig. 7 is a scheme illustrating an example of a process outline of the macro program in the present embodiment. Firstly, the initial setting macro program sets the origin of a stage (step SD-1). The calibration macro program photographs images for viewer calibration (step SD-2).

Then, the photographing macro program carries out plate photographing and so forth (step SD-3). Herein, details of respective processes shown in Fig. 7 will be described later.

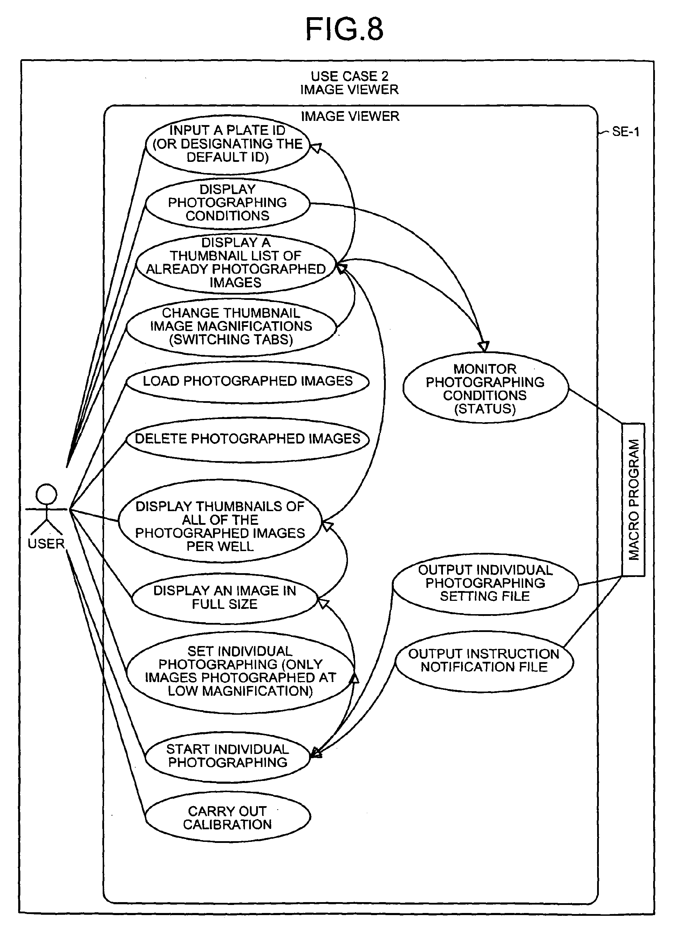

Fig. 8 is a scheme illustrating an example of outline of the process of the image viewer in the present embodiment. The image viewer carries out display of thumbnail images, settings of individual photographing and so forth. Herein, details of respective processes shown in Fig. 8 will be described later.

### [Details of Process in the Embodiment]

### (Process of Initial Setting Macro Program)

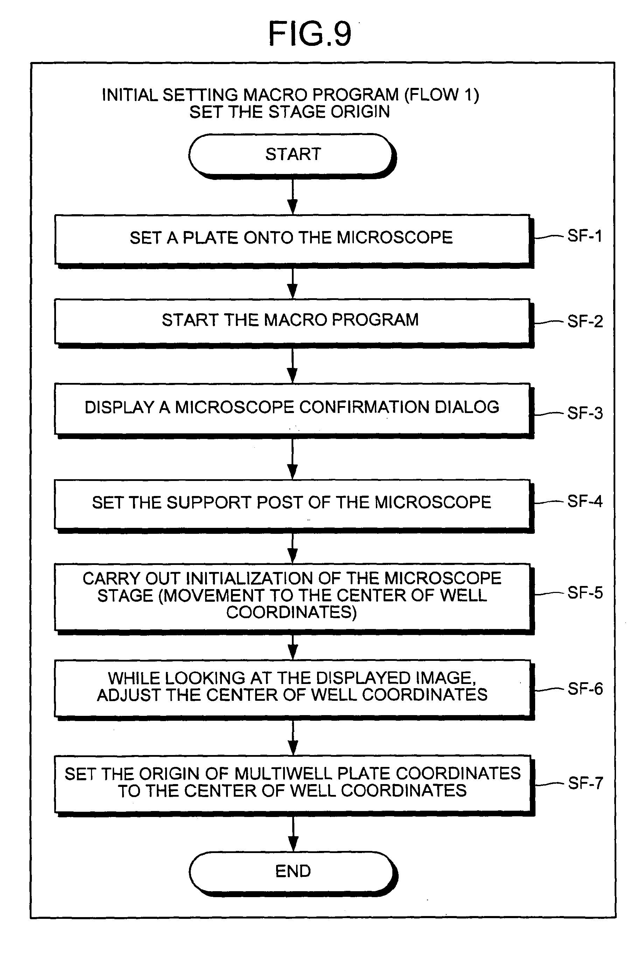

Fig. 9 is a flow chart illustrating a process executed by the initial setting macro program in the present embodiment. Firstly, the user sets a multiwell plate onto the microscope device 400 (step SF-1). Then, the user carries out a specified operation of the image analyzing device 100 to start the initial setting macro program (step SF-2).

Then, the initial setting macro program displays a microscope confirmation dialog on the output device 114 (step SF-3). Then, after the user set the support post of the microscope device 400 (step SF-4), the initial setting macro program carries out initialization of the microscope stage. The initialization may specifically be movement to the center of well coordinates (step SF-5).

Then, the user, while looking at the displayed image on the output device 114 of the image analyzing device 100, finely adjusts the center of well coordinates (step SF-6). Then, the initial setting macro program, after receiving fine adjustment completion instructions from the user, sets the origin of multiwell plate coordinates to the center of well coordinates (step SF-7).

### (Process of Calibration Macro Program)

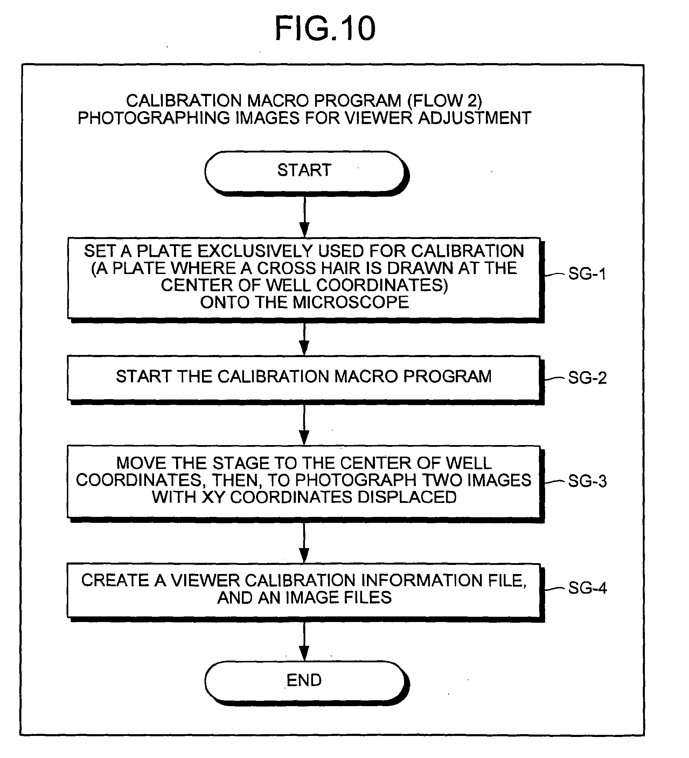

Fig. 10 is a flow chart illustrating an example of a process executed by the calibration macro program in the present embodiment. Firstly, the user sets a plate exclusively used for calibration (for example, a plate where a cross hair is drawn at the center of well coordinates) onto the microscope device 400 (step SG-1). Then, the user carries out a predetermined operation of the image analyzing device 100 to start the calibration macro program (step SG-2).

Then, the calibration macro program instructs the microscope device 400 to move the stage to the center of well coordinates, and then to photograph two images while displacing the xy coordinates (step SG-3). Then, the calibration macro program creates a viewer calibration information file, and image files (step SG-4).

### (Process of Photographing Macro Program)

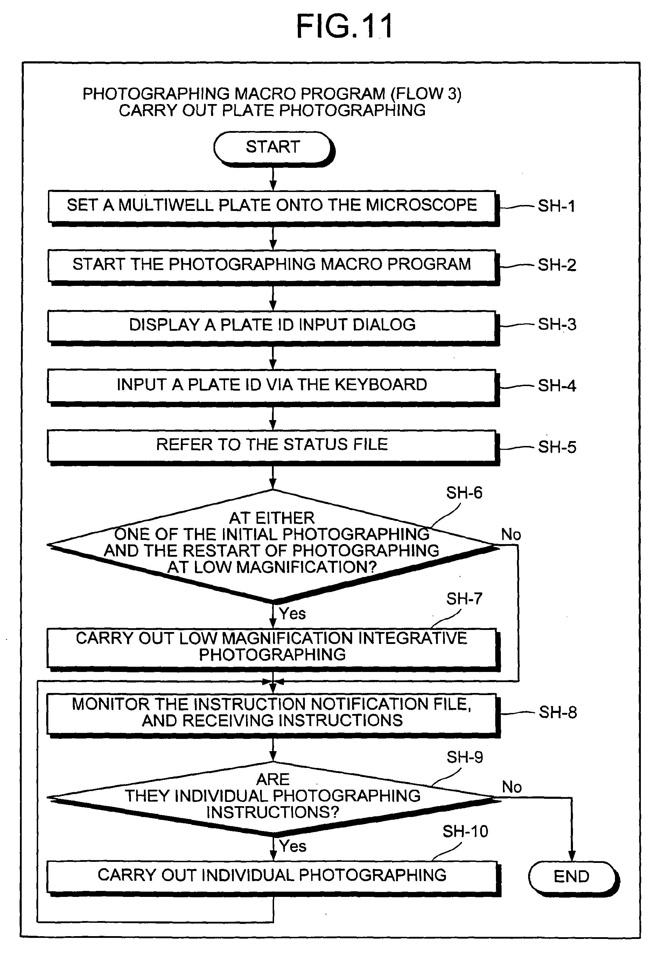

Fig. 11 is a flow chart illustrating an example of a process executed by the photographing macro program in the present embodiment. Firstly, the user sets a multiwell plate onto the microscope device 400 (step SH-1). Then, the user carries out a predetermined operation of the image analyzing device 100 to start the photographing macro program (step SH-2).

Then, the photographing macro program displays a plate ID input dialog on the output device 114 (step SH-3). Then, the user inputs a plate ID via the input device 112, responding to the plate ID input dialog displayed on the output device 114 (step SH-4).

Then, the photographing macro program, after receiving instructions from the user for completing the plate ID input, refers to the status file (step SH-5). Then, the photographing macro program, based on the referred status file, judges whether or not the photographing to be carried out from now is either one of the initial photographing and the restart of photographing at low magnification (step SH-6).

When it is judged that the photographing to be carried out from now is either one of the initial photographing and the restart of the photographing at low magnification, the photographing macro program carries out low magnification integrative photographing, and records a status into the status file after photographing of each well, and stores photographed images to the photographed image directory (step SH-7). Then, the photographing macro program, at completion of low magnification photographing, monitors the instruction notification file, and receives instructions (step SH-8).

If the received instructions are individual photographing instructions (step SH-9), the photographing macro program carries out individual photographing, and records the status into the status file at every operation of photographing (step SH-10). Then, after completion of individual photographing by the step SH-10, the photographing macro program monitors the instruction notification file, and keeps on receiving instructions (step SH-8), and carries out the step SH-9 and, if necessary, the step SH-10.

### (Process of Image Viewer)

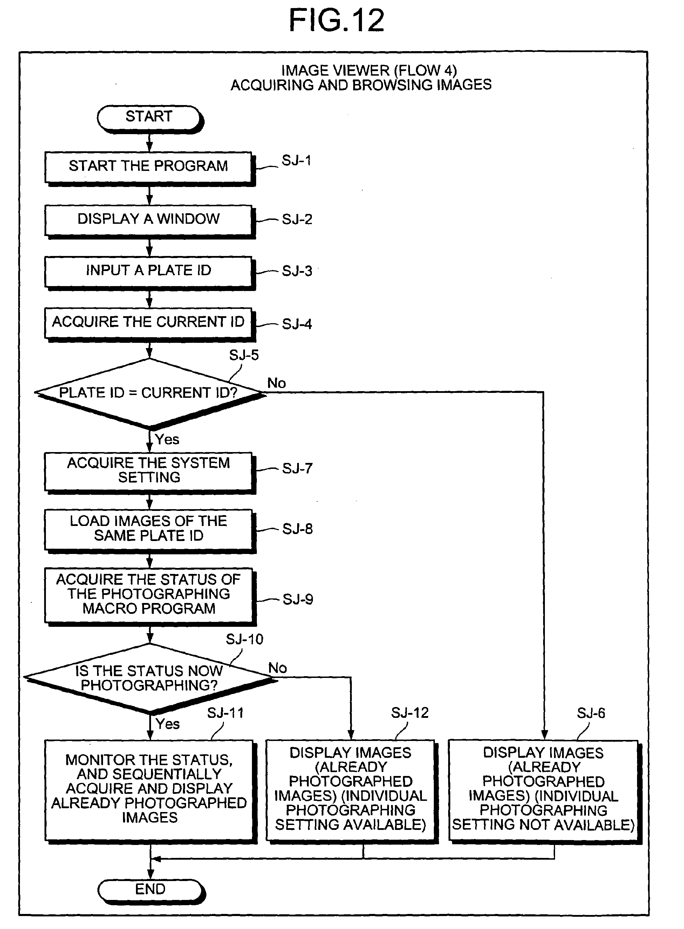

Fig. 12 is a flow chart illustrating an example of a process executed by the image viewer upon acquiring and browsing images in the present embodiment. Firstly, the user carries out a predetermined operation of the image controlling device 200 and thereby starts up the image viewer (step SJ-1). Then, the image viewer displays a window on the output device 214 (step SJ-2).

Then, the user inputs a plate ID in the window displayed on the output device 214 via the input device 212 (step SJ-3). Then, the image viewer acquires the current ID from the plate ID file (step SJ-4).

Then, the image viewer judges whether the input plate ID is identical with the acquired current ID (step SJ-5). If the input plate ID is not identical with the acquired current ID (step SJ-5), then, the image viewer displays already acquired local images on the output device 214 (step SJ-6). In this case, individual photographing setting is not carried out.

If the input plate ID is identical with the acquired current ID (step SJ-5), then, the image viewer acquires the system setting from the system setting file (step SJ-7). Then, the image viewer loads images having the same plate ID (step SJ-8).

Then, the image viewer acquires the status of the photographing macro program from the status file (step SJ-9). Then, the image viewer, based on the acquired status of the photographing macro program, judges whether the status is now photographing, or waiting for instructions (step SJ-10).

If the status is now photographing (step SJ-10), then, the image viewer monitors the status, and sequentially acquires and displays already photographed images (step SJ-11). If the status is waiting for instructions (step SJ-10), then, the image viewer displays already acquired images (step SJ-12). In this case, individual photographing setting may be carried out.

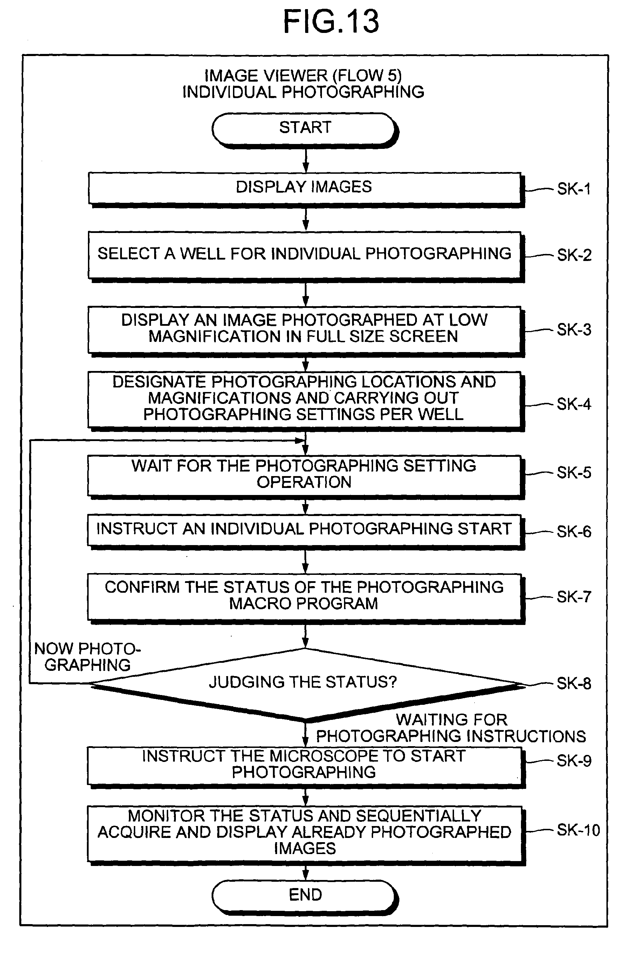

Fig. 13 is a flow chart illustrating an example of a process executed by the image viewer upon individual photographing in the present embodiment. Firstly, the image viewer displays images on the output device 214 (step SK-1). At this moment, individual photographing setting may be carried out. Then, the user selects a well for individual photographing (step SK-2).

Then, the image viewer displays an image photographed at low magnification in full size screen on the output device 214 (step SK-3). Then, the user designates photographing locations and magnifications and carries out photographing settings per well (step SK-4).

Herein, the settings of photographing locations and magnifications may be made in the following procedures. When the user carries out a dragging operation by the mouse on a desired location on the display screen (for example, in the display area MC-1 of the image file in Fig. 6), photographing frame information around the location (for example, MC-2 in Fig. 6) is displayed in an overlaid manner on the display screen. Herein, photographing frame information of different magnifications may be displayed depending on dragging distances (for example, photographing frame information of magnifying power of 80 is displayed by dragging in a short distance, photographing frame information of magnifying power of 40 is displayed by dragging in a middle distance, photographing frame information of magnifying power of 20 is displayed by dragging in a long distance, and so forth). The user adjusts photographing frame information at desired locations, and thereby sets photographing locations.

Then, the image viewer waits for the photographing setting operation (step SK-5).

Then, when the user instructs initiation of an individual photographing (step SK-6), the image viewer confirms the status of the photographing macro program to the status file (step SK-7). Then, the image viewer judges whether the status of the photographing macro program is "now photographing" or "waiting for photographing instructions" (step SK-8). If the status is "now photographing", the image viewer goes back to the process of the step SK-5.

If the status of the photographing macro program is "waiting for photographing instructions", then, the image viewer instructs the microscope device 400 to start photographing (step SK-9). Then, the image viewer monitors the status and sequentially acquires and displays the photographed images (step SK-10).

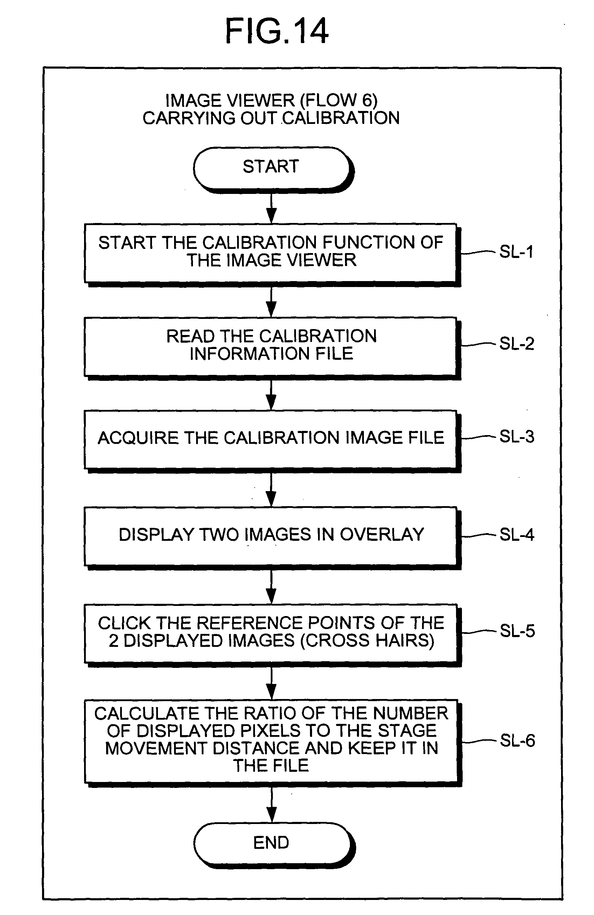

Fig. 14 is a flow chart illustrating an example of a process executed by the image viewer upon calibration execution in the present embodiment. Firstly, the user carries out a predetermined operation to start the calibration function of the image viewer (step SL-1). Then, the image viewer reads the calibration information file (step SL-2).

Then, the image viewer acquires the calibration information file (step SL-3). Then, the image viewer displays two images in an overlaid manner on the output device 214 (step SL-4). Then, the user clicks the reference points of the two displayed images (for example, center points of cross hairs) (step SL-5). Then, the image viewer calculates the ratio of the number of displayed pixels with respect to the stage movement distance and keeps it in the file (step SL-6).

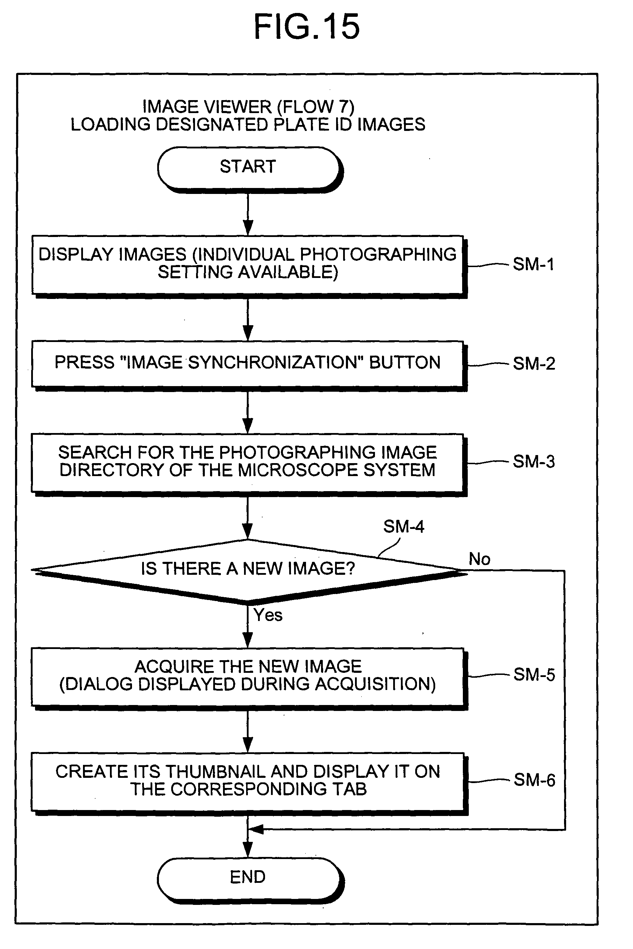

Fig. 15 is a flow chart illustrating an example of a process executed by the image viewer upon loading execution of a designated plate ID image in the present embodiment. Firstly, the image viewer displays images on the output device 214 (step SM-1). At this moment, individual photographing setting may be carried out. Then, the user designates "image synchronization" button via the input device 212 (step SM-2).

Then, the image viewer searches the photographing image directory of the microscope system (DM-IRE2) (product name) (step SM-3). Then, the image viewer judges whether there is a new image in the photographing image directory (step SM-4). If there is a new image, the image viewer acquires the new image (step SM-5), and creates its thumbnail and displays it on the corresponding magnification designation tab (step SM-6).

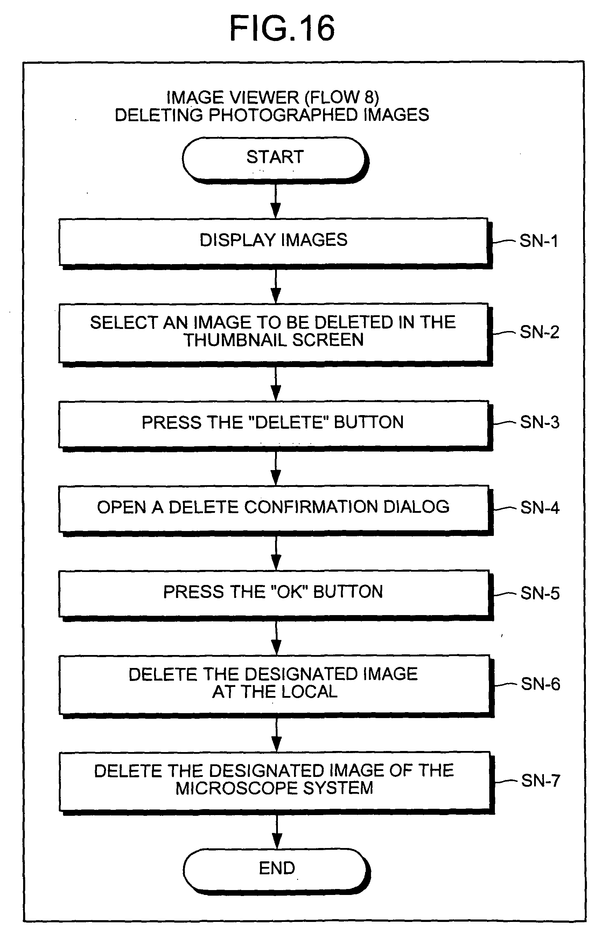

Fig. 16 is a flow chart illustrating an example of a process executed by the image viewer upon deletion execution of a photographed image in the present embodiment. Firstly, the image viewer displays images on the output device 214 (step SN-1). Then, the user selects an image to be deleted in the thumbnail screen (step SN-2). Then, the user designates the "delete" button via the input device 212 (step SN-3).

Then, the image viewer opens a delete confirmation dialog on the output device 214 (step SN-4). Then, the user designates the "OK" button in the delete confirmation dialog opened on the output device 214 via the input device 212 (step SN-5).

Then, the image viewer deletes the designated image at the local (step SN-6). Then, the image viewer deletes the designated image in the microscope system (DM-IRE2) (product name) from the photographing image directory (step SN-7).

### (Process Sequence of Cooperative Actions)

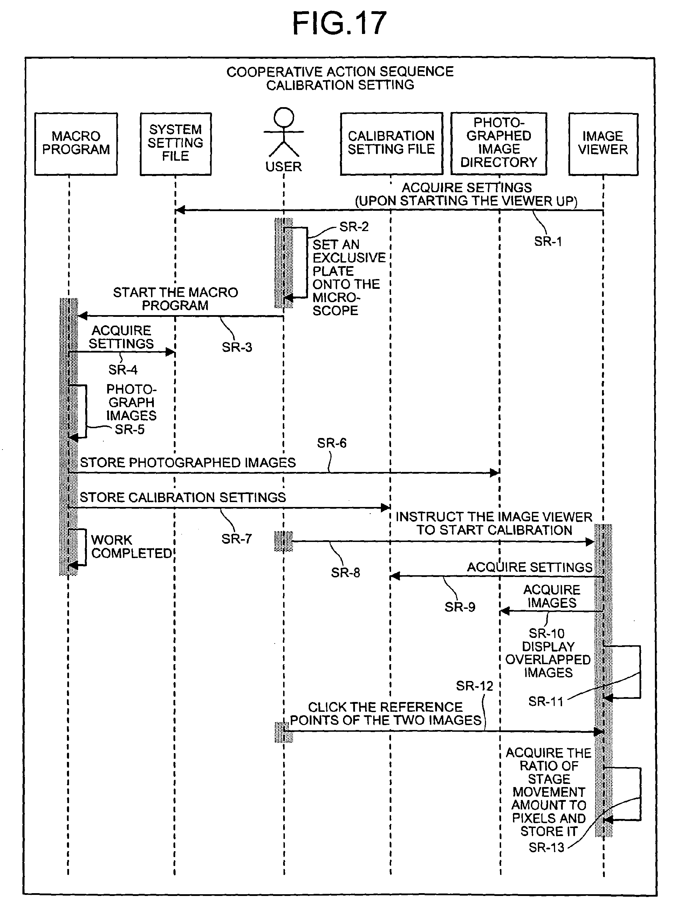

Fig. 17 is a scheme illustrating a process sequence of an example of cooperative actions upon calibration setting. Firstly, the user carries out a predetermined operation of the image controlling device 200 to start up the image viewer. Then the image viewer acquires settings from the system setting file (step SR-1). Then, the user sets an exclusive plate onto the microscope device 400 (step SR-2).

Then, the user carries out a predetermined operation of the image analyzing device 100 to start the macro program (step SR-3). Then, the macro program acquires settings from the system setting file (step SR-4). Then, the macro program photographs images (step SR-5).

Then, the macro program stores photographed images into the photographing image directory (step SR-6). Then, the macro program stores calibration settings into the calibration setting file (step SR-7). Then, the user instructs the image viewer to start calibration (step SR-8).

Then, the image viewer acquires settings from the calibration setting file (step SR-9). Then, the image viewer acquires images from the photographing image directory (step SR-10). Then, the image viewer displays overlapped images (step SR-11).

Then, the user clicks the reference points of the two images via the input device 212 (step SR-12). Then, the image viewer acquires the ratio of stage movement amount with respect to the number of pixels and stores it (step SR-13).

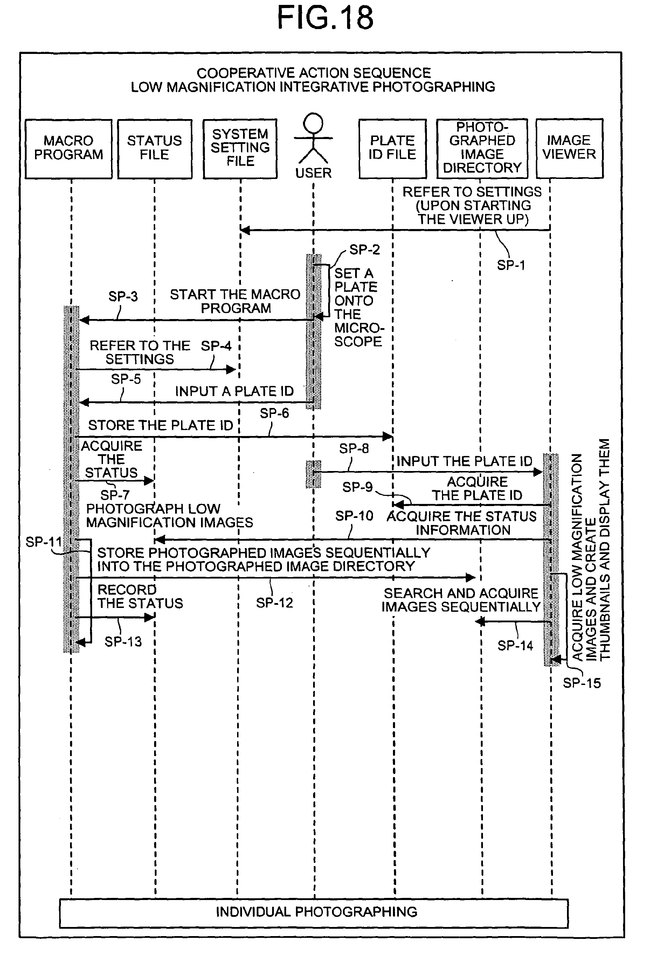

Fig. 18 is a scheme illustrating a process sequence of an example of cooperative actions upon low magnification integrative photographing. Firstly, the user carries out a predetermined operation of the image controlling device 200 to start up the image viewer, then the image viewer refers to settings of the system setting file (step SP-1).

Then, the user sets a plate onto the microscope device 400 (step SP-2). The user carries out a predetermined operation of the image analyzing device 100 to start the macro program (step SP-3). Then, the macro program refers to the settings of the system setting file (step SP-4). Then, the user inputs a plate ID into the macro program via the input device 112 (step SP-5).

Then, the macro program stores the plate ID to the plate ID file (step SP-6). Then, the macro program acquires the status from the status file (step SP-7). Then, the user inputs the plate ID into the image viewer via the input device 212 (step SP-8).

Then, the image viewer acquires the plate ID from the plate ID file (step SP-9). Then, the image viewer acquires the status information from the status file (step SP-10). Then, the macro program photographs low magnification images (step SP-11).

Then, the macro program stores photographed images sequentially into the photographed image directory (step SP-12). Then, the macro program records the status into the status file (step SP-13). Then, the image viewer acquires low magnification images from the photographed image directory (step SP-14), and creates thumbnails and displays them (step SP-15).

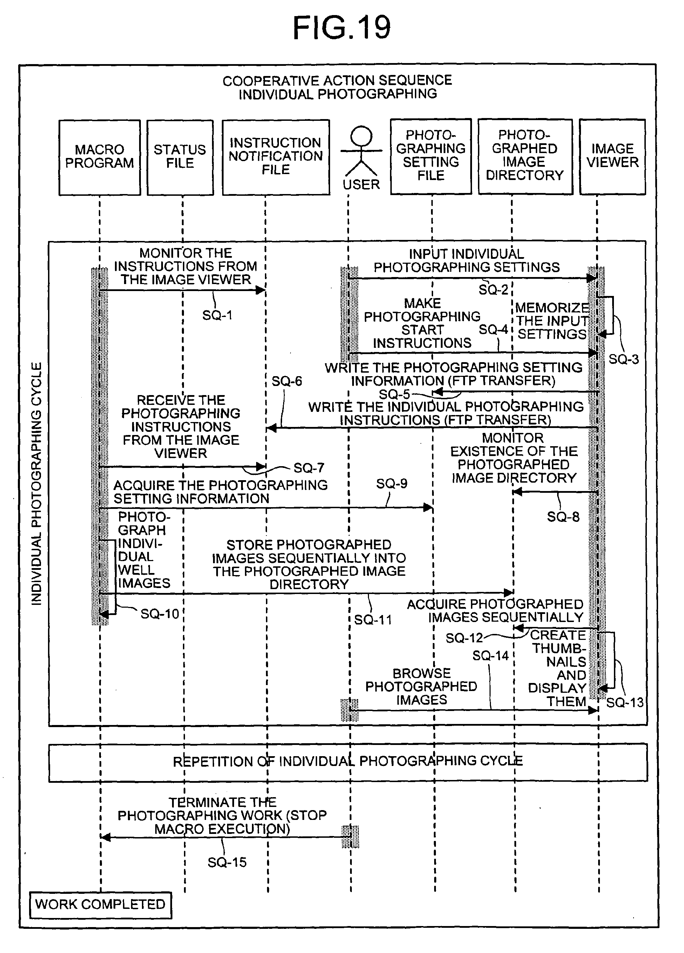

Fig. 19 is a scheme illustrating a process sequence of an example of cooperative actions upon individual photographing. Firstly, the macro program monitors the instruction notification file to confirm instructions from the image viewer (step SQ-1). Then, the user inputs individual photographing settings via the input device 212 of the image viewer (step SQ-2). Then, the image viewer memorizes the input settings (step SQ-3).

Then, the user issues instructions for starting photographing via the input device 212 (step SQ-4). Then, the image viewer writes the photographing setting information into the photographing setting file (FTP transfer) (step SQ-5). Then, the image viewer writes the individual photographing instructions into the instruction notification file (FTP transfer) (step SQ-6).

Then, the macro program receives the photographing instructions from the instruction notification file in which the photographing instructions from the image viewer have been written (step SQ-7). Then, the image viewer monitors the photographed image directory to confirm whether there is or is not a photographed image (step SQ-8).

Then, the macro program acquires the photographing setting information from the photographing setting file (step SQ-9). Then, the macro program photographs individual well images (step SQ-10). Then, the macro program stores the photographed images sequentially into the photographed image directory (step SQ-11).

Then, the image viewer acquires photographed images sequentially from the photographed image directory (step SQ-12). Then, the image viewer creates thumbnails and displayed them on the output device 214 (step SQ-13). Then, the user browses photographed images displayed on the output device 214 of the image viewer (step SQ-14). The steps SQ-1 through SQ-14 are repeated as an individual photographing cycle.

Then, the user instructs the macro program to complete the photographing work (step SQ-15).

That is the end of the explanation of the embodiment in the plate photographing process in the case of the hybridization experiment.

### [Other Embodiments]

Although the embodiment of the present invention has been explained hereinabove, the present invention may be performed in a variety of embodiments other than the aforementioned ones as long as they are within the spirit of the technical features described in the claims.

For example, although the image analyzing device 100 in the aforementioned embodiment carries out its processes in standalone manners, the processes may also be carried out in accordance with requests from a client terminal that is configured in a separate enclosure apart from the image analyzing device 100, and the results of the processes may be fed back to the client terminal.

Further, the image analyzing device 100 and the image controlling device 200 may be configured in a single enclosure.

Although the microscope system (DM-IRE2) (product name) of Leika Micro Systems (company name) is employed in the aforementioned examples, the present invention is not limited thereto. Alternative equivalents to this microscope may be Axiovert 200M (product name) of Carl Zeiss (company name), TE2000E (product name) of Nikon (company name), and IX81 (product name) of Olympus (company name). Although the image analyzing device 100 in the aforementioned example is implemented with a PC and image measurement software Qwin (product name) attached to the microscope system from Leica Microsystems (company name) and the macro programs packaged therein, the present invention is not limited thereto. Alternative software equivalent to the Qwin (product name) may be MetaMorph (product name) of Universal Imaging Corporation (company name), and Lumina Vision (product name) of Mitsuya Shoji (company name). Further, it is not essential that the image analyzing device 100 is equipped with such existing image measurement software.

Moreover, the acquisition of low magnification images (step SA-2) and the notification of individual photographing information (step SA-5) described above may be implemented by use of an existing electronic mail sending technology. These steps may also be implemented by presenting a predetermined input format to a user to input information and sending the input information, with use of the function provided by a web site provided by the image analyzing device 100 or the image controlling device 200. These steps may also be implemented by existing file transfer technologies such as FTP.

Further, among the processes explained in the embodiment, all or a part of the processes explained as to be carried out automatically may be carried out manually, or all or a part of the processes explained as to be carried out manually may be carried out automatically by a known method.

Furthermore, process procedures, controlling procedures, specific names, information including a variety of registered data and parameters of search conditions and the like, screen examples, and database configurations in the explanation above and the drawings may be arbitrarily changed, unless otherwise specified.

Further, with regard to the image analyzing device 100, each component thereof explained above is functionally conceptual, and is not necessarily physically configured as shown in the drawings.

For example, with regard to processing functions of each unit or each device of the image analyzing device 100, especially with regard to each processing function to be carried out by the controlling unit 102, all or a part thereof may be implemented by a Central Processing Unit (CPU) and a program to be interpreted and executed by the CPU, or may be implemented by hardware of wired logic. The program may be recorded in a recording medium that will be described later, and mechanically read by the image analyzing device 100 if necessary.

Namely, in the memory unit 106 such as a ROM or a HD, a computer program is recorded for giving commands to the CPU in cooperation with an Operating System (OS), and thereby carrying out a variety of processes. This computer program is loaded in, e.g., the RAM and thereby executed, and configures the controlling unit 102 together with the CPU. Further, this computer program may be recorded into an application program server that is connected to the image analyzing device 100 via an arbitrary network 300, and if necessary, all or a part thereof may be downloaded.

Further, a program according to the present invention may be stored into a computer readable recording medium. Herein, this "recording medium" includes an arbitrary "portable physical media" such as a flexible disk, a optical magnetic disk, a ROM, an EPROM, an EEPROM, a CD-ROM, an MO, a DVD and the like, an arbitrary "fixed physical media" such as a ROM, a RAM, a HD and the like built in a variety of computer systems, or a "communication medium" that is for keeping programs for a short period of time, such as a communication line and carrier waves for sending programs via a network such as a LAN, a WAN, and the Internet.

Furthermore, a "program" herein is a data processing method described in an arbitrary language and describing method, regardless of formats of source codes and binary codes and so forth. The "program" is not limited to one that is structured independently, but includes one that is distributably structured in a plurality of modules or libraries, and one that works cooperatively with separate programs such as an Operating System (OS) for achieving the functions thereof. With regard to the specific configuration for reading a recording medium, reading procedures, or installation procedures after reading and the like in the respective devices shown in the embodiment, known configurations and procedures may be employed.

The databases and the like that are stored in the memory unit 106 are memory devices such as a RAM and a ROM, fixed disk devices such as a hard disk, and storage units such as a flexible disk and an optical disk, which store a variety of programs, tables, files, databases, web page files, and so forth for a variety of processes and providing web sites.

Further, the image analyzing device 100 may also be implemented by connecting peripheral devices such as a printer, a monitor, an image scanner and the like to a known information processing device such as an information processing terminal such as a personal computer, a work station or the like, and installing software (including programs, data and so forth) for performing the method of the present invention with the information processing device.

Furthermore, the specific mode of distribution/integration of the image analyzing device 100 is not limited to the shown one, but, all or a part thereof may be distributed and integrated functionally or physically, in arbitrary unit depending on load of each components. For example, the respective databases may be independently configured as separate database devices, and part of processes may be implemented by use of a Common Gateway Interface (CGI).

Moreover, the image controlling device 200 may also be implemented by a known information processing device such as an information processing terminal such as a personal computer, a work station, a household game device, an Internet TV, a PHS terminal, a cell phone, a mobile communication terminal and a PDA, to which peripheral devices such as a printer, a monitor, and an image scanner are connected if necessary, and in which software (including programs, data and so forth) is installed for performing web information browsing functions and electronic mailing functions in cooperation with the information processing device.

With regard to the controlling unit 202 of this image controlling device 200, all or a part thereof may be implemented by a CPU and a program that is interpreted and executed by the CPU. Namely, into the ROM or HD thereof, a computer program that gives commands to the CPU in cooperative work with an Operating System (OS), and thereby carries out a variety of processes is recorded. This computer program is loaded to the RAM and thereby executed, and constitutes the controlling unit in cooperation with the CPU.

This computer program may also be recorded into an application program server connected to the image controlling device 200 via an arbitrary network. If necessary, all or a part thereof may be downloaded. All or a part of each controlling unit may also be implemented by hardware of wired logic or the like.

Further, the network 300 may have functions to connect the image analyzing device 100 and the image controlling device 200 with each other, and may include, for example, any of the Internet, intranet, a LAN (including both wired and wireless), a VAN, a personal communication network, a public telephone network (including both analog and digital), an exclusive line network (including both analog and digital), a CATV net, a portable line exchange net/portable packet exchange network such as IMT2000 method, GSM method or PDC/PDC-P method, a wireless call network, a local wireless network such as Bluetooth, a PHS network, and a satellite communication network such as CS, BS, or ISDB. Namely, the present system may send and receive data via an arbitrary network that is wired or wireless.

As explained in detail hereinabove, according to the present invention, each sample holder portion (for example, each well of a multiwell plate or the like) of a sample holder (for example, a multiwell plate or the like) are integratively photographed by use of a microscope at a predetermined magnification (either a low magnification or a high magnification), and photographed image files are displayed as thumbnails, and among the displayed image files, a user designates individual photographing information concerning the locations and magnifications of the samples that the user wishes to photograph among the image files that the user selects, and each part within the sample holding portion is individually photographed in accordance with the locations and magnifications designated by the individual photographing information. Therefore, the present invention is capable of providing a microscope image processing system, microscope image processing method, program, and recording medium that automatically photograph at desired locations in each well in the plate. Further, according to the present invention, the user may photograph with priority at the locations to which the user pays special attention, simultaneously or in parallel with integratively photographing within each well.

Furthermore, according to the present invention, the individual photographing information designating screen for allowing the user to designate the individual photographing information is displayed on a monitor, and the individual photographing information is created from coordinate information and magnification information that the user designates on the individual photographing information designating screen via the input device. Therefore, the present invention is capable of providing a microscope image processing system, microscope image processing method, program, and recording medium that enable the user to carry out individual photographing by designating desired locations. Moreover, according to the present , invention, the individual photographing information designating screen displayed on the monitor by this system may have a variety of input support functions such as known map viewing functions (keys for moving in 8 directions or 16 directions, buttons for changing magnification settings, and the like). By use of such functions, the user may designate the individual photographing information.

Still further, according to the present invention, any one or both of the coordinate information and magnification information for photographing are determined automatically by the image processing procedure and thereby the individual photographing information is created. Therefore, the present invention is capable of providing a microscope image processing system, microscope image processing method, program, and recording medium that enable to automatically determine the photographing locations of individual photographing by use of, for example, known image processing procedures (for example, gravity center calculation and the like).

### INDUSTRIAL APPLICABILITY

As explained heretofore, a microscope image processing system, microscope image processing method, program, and recording medium according to the present invention may automatically take microscope images as its user intends.

The present invention may be applied to a variety of industrial fields, especially fields of medical supplies, foods, cosmetics, medical treatment and so forth, and is extremely useful.

## Claims

1. A microscope image processing system comprising:
an integrative photographing unit that integratively photographs each sample holding portion of a sample holder at a predetermined magnification with a microscope;
a thumbnail displaying unit that displays image files photographed by said integrative photographing unit as thumbnails;
an individual photographing information designating unit that designates individual photographing information concerning locations and magnifications of samples that a user wishes to photograph, said information corresponding to said image files that said user selects from said image files displayed on said thumbnail displaying unit; and
an individual photographing unit that photographs each part within said sample holding portion in accordance with said locations and magnifications designated by said individual photographing information.

2. The microscope image processing system according to claim 1, wherein
said individual photographing information designating unit displays on a monitor an individual photographing information designating screen for allowing said user to designate said individual photographing information, and creates said individual photographing information from coordinate information and magnification information that said user designates on said individual photographing information designating screen via an input device.

3. The microscope image processing system according to claim 1 or 2, wherein
said individual photographing information designating unit automatically determines any one or both of said coordinate information and magnification information for photographing by an image processing procedure and thereby creates said individual photographing information.

4. A microscope image processing method comprising:
an integrative photographing step of integratively photographing each sample holding portion of a sample holder at a predetermined magnification with a microscope;
a thumbnail displaying step of displaying image files photographed in said integrative photographing step as thumbnails;
an individual photographing information designating step of designating individual photographing information concerning locations and magnifications of samples that a user wishes to photograph, said information corresponding to said image files that said user selects from said image files displayed in said thumbnail displaying step; and
an individual photographing step of photographing each part within said sample holding portion in accordance with said locations and magnifications designated by said individual photographing information.

5. The microscope image processing method according to claim 4, wherein
said individual photographing information designating step displays on a monitor an individual photographing information designating screen for allowing said user to designate said individual photographing information, and creates said individual photographing information from coordinate information and magnification information that said user designates on said individual photographing information designating screen via an input device.

6. The microscope image processing method according to claim 4 or 5, wherein
said individual photographing information designating step automatically determines any one or both of said coordinate information and magnification information for photographing by an image processing procedure and thereby creates said individual photographing information.

7. A program comprising:
an integrative photographing step of integratively photographing each sample holding portion of a sample holder at a predetermined magnification with a microscope;
a thumbnail displaying step of displaying image files photographed in said integrative photographing step as thumbnails;
an individual photographing information designating step of designating individual photographing information concerning locations and magnifications of samples that a user wishes to photograph, said information corresponding to said image files that said user selects from said image files displayed in said thumbnail displaying step; and
an individual photographing step of photographing each part within said sample holding portion in accordance with said locations and magnifications designated by said individual photographing information.

8. The program according to claim 7, wherein
said individual photographing information designating step displays on a monitor an individual photographing information designating screen for allowing said user to designate said individual photographing information, and creates said individual photographing information from coordinate information and magnification information that said user designates on said individual photographing information designating screen via an input device.

9. The program according to claim 7 or 8, wherein
said individual photographing information designating step automatically determines any one or both of said coordinate information and magnification information for photographing by an image processing procedure and thereby creates said individual photographing information.

10. The computer readable recording medium that records a program according to any one of claims 7 to 9.
